# FASCICULE DE BREVET EUROPEEN

(11) **EP 3 672 979 B1**
(45) Date de publication et mention de la délivrance du brevet: **06.01.2021**
(21) Numéro de dépôt: 18778493.9
(22) Date de dépôt: 28.09.2018
(51) Int. Cl.: C07G 1/00

(54) **DÉRIVÉ DE LIGNINE CHIMIQUEMENT STABLE ET PROCÉDÉ POUR SA PRÉPARATION**
CHEMISCH STABILES LIGNINDERIVAT UND VERFAHREN ZUR HERSTELLUNG DAVON
CHEMICALLY STABLE LIGNIN DERIVATIVE AND METHOD FOR PREPARING SAME

(30) Priorité: 29.09.2017 FR 1759134
(43) Date de publication de la demande: 01.07.2020
(73) Titulaire: INSTITUT NATIONAL DE RECHERCHE POUR L'AGRICULTURE, L'ALIMENTATION ET L'ENVIRONNEMENT, 75007 Paris (FR); INSTITUT NATIONAL D'ENSEIGNEMENT SUPERIEUR POUR L'AGRICULTURE, L'ALIMENTATION ET L'ENVIRONNEMENT, 75116 Paris (FR)
(72) Inventeur: ROUMEAS, Laurent, 83140 Six-Fours-les-Plages (FR); BILLERACH, Guillaume, 34080 Montpellier (FR); DUBREUCQ, Eric, 34980 Saint Gély du Fesc (FR); FULCRAND, Hélène, 34980 Saint Gély du Fesc (FR)
(74) Mandataire: Ipside
(86) Numéro de dépôt international: PCT/EP2018/076531
(87) Numéro de publication internationale: WO 2019/063826

(56) Documents cités:
- LI SHUAI ET AL: "Formaldehyde stabilization facilitates lignin monomer production during biomass depolymerization", SCIENCE, vol. 354, no. 6310, 21 octobre 2016 (2016-10-21), pages 329-333, XP055384985, ISSN: 0036-8075, DOI: 10.1126/science.aaf7810 cité dans la demande

## Description

La présente invention s'inscrit dans le domaine de la préparation de molécules d'intérêt à partir de matière biosourcée, plus spécifiquement de biomasse lignocellulosique.

Plus particulièrement, la présente invention concerne un dérivé de lignine particulièrement stable chimiquement, ainsi qu'un procédé de préparation d'un tel dérivé de lignine. L'invention concerne en outre un procédé plus général de dépolymérisation de lignine, et un produit de dépolymérisation issu de la lignine susceptible d'être obtenu par un tel procédé.

En raison de la raréfaction prévisible des ressources fossiles facilement accessibles et des enjeux environnementaux associés à leur utilisation, les industries pétrolière et chimique sont amenées à se tourner de plus en plus vers la biomasse en tant que source de carbone pour la synthèse des molécules.

Un intérêt particulier s'est à cet effet porté sur les lignines, l'un des composants de la biomasse lignocellulosique. Les lignines sont des macromolécules de structure complexe, très hétérogène, qui constituent l'un des principaux composants du bois, et qui sont présentes dans les parois cellulaires des plantes vasculaires ainsi que dans quelques organismes non-vasculaires tels que certaines algues et hépatiques.

En particulier, les lignines représentent la plus abondante source de composés aromatiques naturels, si bien que l'exploitation industrielle de ces macromolécules constitue un enjeu économique important depuis plusieurs décennies. Plus précisément, les lignines sont des biopolymères organiques de monolignols, leurs principaux monomères constitutifs étant l'alcool coumarylique, l'alcool coniférylique et l'alcool sinapylique. Sur le plan de leur structure chimique, les lignines sont constituées d'unités propyl-phénol liées entre elles par l'intermédiaire de divers types de liaisons dont des liaisons C-O et des liaisons C-C, de type bi-aryl éther, bi-aryle, aryl glycérol et β-aryl éther.

Un exemple de formule générale communément utilisée pour représenter les lignines est la suivante : 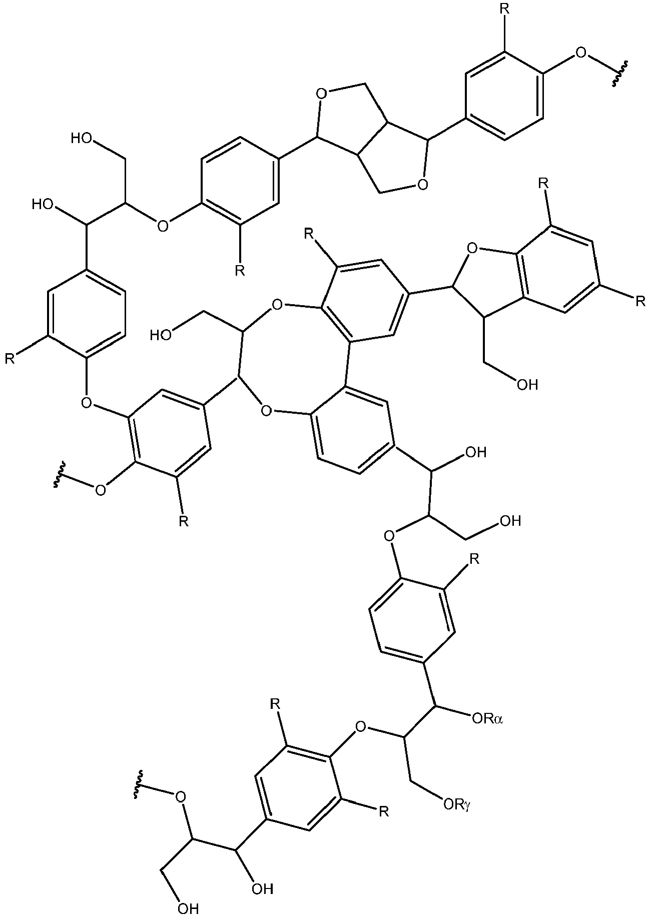 formule dans laquelle R représente indifféremment un atome d'hydrogène, un groupement méthoxy -OMe ou un motif 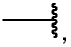 Rα représente un atome d'hydrogène ou un groupement aryle et Rγ représente un atome d'hydrogène, un groupement acétyle ou un dérivé cinnamoyle (feruoyl par exemple).

Les liaisons les plus abondantes y sont les liaisons de type β-*O*-4, illustrées de manière plus détaillée sur la formule d'une unité constitutive caractéristique des lignines suivante :

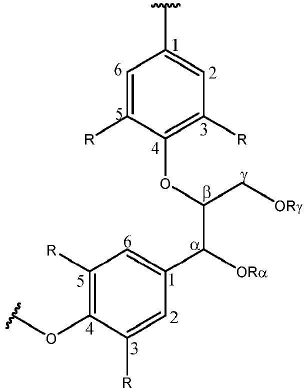

On note dans cette structure la présence d'un groupement hydroxyle benzylique (Rα = H) ou éther d'aryle (Rα = aryl) sur l'atome de carbone en position α, c'est-à-dire sur le carbone benzylique.

Cependant, malgré des volumes en forte augmentation du fait de l'exploitation croissante de la lignocellulose pour l'élaboration de biocarburants de deuxième génération, les lignines demeurent à ce jour très peu valorisées, notamment pour des applications de moyenne à haute valeur ajoutée. En cause, la nature des lignines, des biopolymères hétérogènes, polydispersés, de structure variable, et le fait qu'elles sont souvent modifiées et/ou dégradées par les procédés mêmes qui sont mis en œuvre pour leur obtention, ce qui constitue actuellement un frein véritable pour leur utilisation en chimie fine.

De nombreux travaux se sont notamment intéressés au développement de procédés de dépolymérisation des lignines, de sorte à en obtenir les mono-phénols constitutifs, qui sont plus facilement exploitables dans les secteurs de la chimie, notamment de la chimie dite de spécialité. Différentes méthodes chimiques, thermiques et/ou catalytiques de dépolymérisation des lignines ont ainsi été proposées par l'art antérieur.

L'hydrogénolyse catalytique, ou hydrocraquage, est en particulier décrite comme la technique actuellement disponible permettant d'accéder aux meilleurs rendements de dépolymérisation des lignines. Ce type de procédé est basé sur la présence dans la lignine de liaisons sensibles à l'hydrogénolyse, et notamment les liaisons glycérol-β-*O*-4-aryl évoquées ci-avant.

Cependant, la réactivité des groupes hydroxyles p-alkoxybenzyliques, sur les carbones en position α, qui sont nucléofuges en milieu acide, génère lors de la réaction d'hydrogénolyse des intermédiaires cationiques très réactifs et prompts aux réarrangements, notamment par condensation avec les phénols et les éthers d'aryle présents dans la structure des lignines. Ces réarrangements provoquent la formation de molécules de lignines condensées, qui s'avèrent peu extractibles et difficilement dépolymérisables. Ainsi, les rendements des réactions de dépolymérisation des lignines par hydrogénolyse restent relativement faibles.

Il a été proposé par l'art antérieur, illustré notamment par la publication de Roberts et al., 2011, dans Chemistry, 17(31), 5939-48, de dépolymériser de la lignine par une méthode hydrothermale alcaline. Cette méthode, si elle permet d'obtenir de bons rendements en monomères et oligomères, présente toutefois les inconvénients de consommer beaucoup de réactifs, et de nécessiter des températures et des pressions élevées, si bien qu'elle s'avère coûteuse à mettre en œuvre.

Il a autrement récemment été proposé par l'art antérieur, illustré notamment par la publication de Shuai et al., 2016, dans Science, 354 (6310), 329-333, de stabiliser les lignines par modification chimique lors de leur extraction, en effectuant un traitement à chaud dans un mélange de dioxane et de formaldéhyde chlorhydrique. Cette stabilisation augmente les rendements de la réaction d'hydrogénolyse ultérieure, et permet d'obtenir des monomères constitutifs de la lignine initiale, les monomères guaiacyl et syringyl. Cependant, ces rendements restent encore faibles, notamment en raison de l'occurrence de réactions de recondensation dues à la formation de groupements hydroxyméthyles benzyliques électrophiles réactifs, par réaction du formaldéhyde et de la lignine. En outre, l'utilisation du formaldéhyde est de manière générale à éviter en raison de sa toxicité pour les mammifères.

Il a maintenant été découvert par les présents inventeurs qu'il est possible de stabiliser efficacement les lignines par une réaction de condensation d'alcools p-hydroxybenzyliques et p-alkoxybenzyliques d'unités constitutives de la lignine avec des réactifs nucléophiles aromatiques particuliers, notamment des dérivés du furane, du pyrrole ou du thiophène. Du fait de leur stabilité chimique importante, les lignines modifiées ainsi obtenues, fonctionnalisées par substitution de groupements hydroxyles benzyliques par le réactif nucléophile aromatique, peuvent être facilement dépolymérisées par hydrogénolyse, pour former notamment des monophénols, et ce avec des rendements particulièrement élevés.

Ainsi, la présente invention vise à remédier aux inconvénients des procédés proposés par l'art antérieur pour la dépolymérisation des lignines, notamment aux inconvénients exposés ci-avant, en proposant un procédé qui permette de produire, avec un haut rendement, des molécules organiques monophénoliques à partir de lignine, isolée ou sous forme de biomasse lignocellulosique. La présente invention vise tout particulièrement à proposer un dérivé de lignine qui puisse, par une réaction adéquate, notamment une réaction d'hydrolyse ou d'hydrogénolyse, être facilement dépolymérisé avec un rendement élevé, pour obtenir des monomères constitutifs de la lignine, notamment des monomères aromatiques, en particulier phénoliques, à fort intérêt dans le domaine de la chimie.

La présente invention vise en outre à ce que ce procédé soit facile et rapide à mettre en œuvre, et qui plus est à faible coût. Un objectif supplémentaire de l'invention est que la mise en œuvre de ce procédé soit respectueuse de l'environnement, et sans danger pour l'être humain.

Ainsi, selon un premier aspect, il est proposé selon la présente invention un dérivé de lignine comprenant une unité de formule générale (I) : 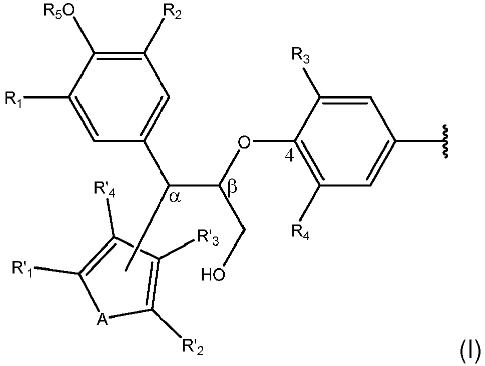 dans laquelle :
R₁, R₂, R₃ et R₄, identiques ou différents, représentent chacun un atome d'hydrogène, un groupement méthoxy -OMe, un groupement hydroxyle, le cas échéant protégé par un groupement protecteur d'une fonction hydroxyle, ou un motif 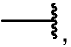
R₅ représente un atome d'hydrogène, un groupement protecteur d'une fonction hydroxyle ou un motif 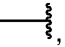
A représente un atome d'oxygène, un atome de soufre ou un groupement -NR', où R' représente un atome d'hydrogène ou un substituant ne comportant pas de groupement électro-attracteur par effet mésomère conjugué au noyau aromatique, notamment un groupement alkyle, de préférence en C1-C4, par exemple un groupement méthyle,
R'₁, R'₂, R'₃ et R'₄, identiques ou différents, représentent chacun un atome d'hydrogène ou un substituant ne comportant pas de groupement électro-attracteur par effet mésomère conjugué au noyau aromatique,
un substituant parmi R'₁, R'₂, R'₃ et R'₄ représentant la liaison covalente avec le carbone benzylique,
ou un de ses sels.

Le dérivé de lignine de formule générale (I) selon l'invention, dans lequel le groupement hydroxyle benzylique naturellement présent en position α de la lignine a été substitué par un métallole, plus particulièrement un dérivé du furane, du thiophène ou du pyrrole, est très stable chimiquement. Soumis à une réaction d'hydrocraquage, il permet de ce fait d'obtenir des monomères constitutifs de la lignine avec des rendements particulièrement élevés.

Il peut en outre être obtenu en conditions relativement douces, notamment par un procédé tel qu'il sera décrit ci-après dans la présente description.

Les configurations du dérivé de lignine selon l'invention dans lesquelles R₁, R₂, R₃ et/ou R₄ représentent un groupement hydroxyle peuvent être obtenues, à partir de la lignine, par exemple par libération de groupements méthoxy naturellement portés par la lignine par un traitement chimique, biophysique ou microbien de déméthylation, comme décrit par exemple par Sawamura et al. 2017, dans ACS Sustainable Chemistry and Engineering, 5(6), 5424-5431.

La formule générale (I) ci-dessus englobe toutes les combinaisons possibles de formes isomères au niveau des carbones asymétriques, et tous les mélanges de telles formes isomères. A partir d'un mélange d'isomères, chaque isomère particulier peut être obtenu par des méthodes de purification classiques en elles-mêmes pour l'homme du métier.

Par groupement protecteur d'une fonction hydroxyle, on entend tout groupement utilisé de manière classique en elle-même pour protéger une fonction hydroxyle, plus particulièrement un hydroxyle phénolique, c'est-à-dire pour masquer sa réactivité en vue de réactions ultérieures. Il entre dans les compétences de l'homme du métier de savoir identifier les groupements protecteurs de fonctions hydroxyles pouvant être mis en œuvre dans le cadre de l'invention. Ces groupements sont notamment listés dans l'ouvrage de Greene, « Protective groups in Organic Synthesis », Wiley & Sons, 1981, en particulier dans le chapitre 2, qui porte spécifiquement sur la protection de groupements hydroxyle, et le chapitre 3 qui porte sur la protection des phénols et catéchols.

Chacun des groupements protecteurs d'une fonction hydroxyle peut par exemple être choisi parmi les groupements alkyle, acyle, notamment acétyle, benzyle, silyle, sulfonyle, alkoxy-alkyl, par exemple méthoxyméthyl, méthoxyéthoxyméthyl ou benzoxyméthyl, etc.

Les groupements protecteurs d'une fonction hydroxyle portés par le dérivé selon l'invention peuvent être tous identiques, ou être différents les uns des autres, les groupements protecteurs portés par les fonctions hydroxyle d'un même noyau étant alors de préférence identiques les uns aux autres.

Par l'expression « noyau aromatique », on désignera dans la présente description, par convention, le noyau aromatique à 5 chainons dérivé du furane, du thiophène ou du pyrrole, qui est fixé sur le squelette de la lignine. Ainsi, par convention, cette expression ne sera jamais utilisée dans la présente description pour désigner un des cycles aromatiques entrant dans la constitution de la macromolécule de lignine elle-même.

Par substituant ne comportant pas de groupement électro-attracteur par effet mésomère conjugué au noyau aromatique, on entend tout substituant ne comportant aucun groupement électro-attracteur par effet mésomère qui soit lié directement, ou par conjugaison, au noyau aromatique du dérivé de lignine de formule générale (I). On apprécie, selon la présente invention, le caractère électro-attracteur d'un groupement par rapport au noyau aromatique du métallole auquel le substituant portant ce groupement est fixé. Ainsi, selon l'invention, le noyau aromatique du métallole ne porte aucun substituant apte à l'appauvrir en électrons, c'est-à-dire aucun substituant comportant un groupement électro-attracteur (ce caractère étant apprécié vis-à-vis de ce noyau aromatique) par effet mésomère qui lui est conjugué.

Il est du ressort de l'homme du métier de déterminer, à partir de ses connaissances générales, quels substituants entrent ou n'entrent pas dans une telle définition. Les connaissances générales de l'homme du métier en la matière sont notamment illustrées par l'ouvrage de René Milcent, Chimie organique: Stéréochimie, entités réactives et réactions, EDP Sciences - 2007, en particulier dans les chapitres 5.5 et 5.6.

A titre d'exemple, des substituants exclus de la définition de R'₁, R'₂, R'₃ et R'₄, sont des substituants comportant, lié directement ou par conjugaison au noyau aromatique, un radical électro-attracteur tel qu'un radical nitro, carbonyle, carboxylique ou sulfonique, éventuellement salifié ou estérifié, amide, cyano, sulfonyle, etc.

Lorsque, dans la formule générale (I), R₅ représente un atome d'hydrogène ou un groupement protecteur d'une fonction hydroxyle, l'unité de formule générale (I) est une unité terminale du dérivé de lignine. Lorsque R₅ représente un motif : 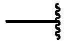 l'unité de formule générale (I) est une unité d'extension du dérivé de lignine.

Le nombre de groupements R₁, R₂, R₃ et R₄ représentant un motif 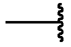 dans l'unité de formule générale (I) est variable, et dépend du degré de réticulation du dérivé de lignine selon l'invention. Préférentiellement, dans l'unité de formule générale (I), aucun de R₁, R₂, R₃ et R₄ ne représente un motif 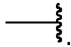 Dans des variantes de l'invention, un seul de R₁, R₂, R₃ et R₄ représente un motif 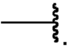 L'invention n'exclut pas pour autant que deux, trois ou même les quatre de R₁, R₂, R₃ et R₄ représentent un motif

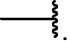

Le dérivé de lignine selon l'invention peut en particulier être tel que dans la formule générale (I), R'₁ et R'₂, identiques ou différents, représentent chacun, à l'exception du substituant formant la liaison covalente avec le carbone benzylique :
- un atome d'hydrogène,
- ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes, chaque hétéroatome étant notamment choisi parmi O, N, P, Si et S, ledit radical carboné ne comportant pas de groupement électro-attracteur par effet mésomère conjugué au noyau aromatique.

Le dérivé de lignine selon l'invention peut en particulier être tel que dans la formule générale (I), R'₃ et R'₄, identiques ou différents, représentent chacun, à l'exception du substituant formant la liaison covalente avec le carbone benzylique :
- un atome d'hydrogène,
- un groupement comportant un radical électro-donneur, par effet inductif ou mésomère, lié directement ou par conjugaison au noyau aromatique, par exemple choisi parmi un radical amino, oxy ou thio, éventuellement substitué, ledit groupement ne comportant pas de groupement électro-attracteur par effet mésomère conjugué au noyau aromatique,
- ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes, chaque hétéroatome étant notamment choisi parmi O, N, P, Si et S, ledit radical carboné ne comportant pas de groupement électro-attracteur par effet mésomère conjugué au noyau aromatique.

Comme pour le caractère électro-attracteur, on apprécie, selon la présente invention, le caractère électro-donneur d'un radical par rapport au noyau aromatique du métallole auquel le substituant portant ce radical est fixé. Ainsi, dans des modes de réalisation particuliers de l'invention, le noyau aromatique du métallole porte un ou plusieurs substituants apte(s) à l'enrichir en électrons par effet mésomère ou inductif, c'est-à-dire comportant un groupement électro-donneur (vis-à-vis de ce noyau aromatique) lié directement ou par conjugaison à ce noyau aromatique.

Il est du ressort de l'homme du métier de déterminer quels groupements sont électro-donneurs ou électro-attracteurs vis-à-vis du noyau aromatique du métallole. A cet effet, l'homme du métier pourra notamment se référer à l'ouvrage de René Milcent, Chimie organique : Stéréochimie, entités réactives et réactions, EDP Sciences - 2007, qui illustre ses connaissances générales en la matière.

En particulier, chacun de R'₁, R'₂, R'₃ et R'₄ peut représenter, indépendamment des autres, un groupement alkyle, notamment à chaîne linéaire, de préférence en C1-C18, de préférence encore en C1-C10, et préférentiellement en C1-C4, par exemple un groupement méthyle ou un groupement éthyle.

Préférentiellement, dans la formule générale (I), au moins un substituant parmi R'₁, R'₂, R'₃ et R'₄ représente un atome d'hydrogène.

Le composé selon l'invention peut en particulier être tel que dans la formule générale (I), R'₁, R'₂, R'₃ et R'₄, identiques ou différents, représentent chacun, lorsqu'ils ne forment pas la liaison covalente avec le carbone benzylique, un atome d'hydrogène ou un radical hydrocarboné linéaire ou ramifié, éventuellement substitué, éventuellement interrompu par un ou plusieurs hétéroatomes et/ou par un ou plusieurs groupements comprenant un ou plusieurs hétéroatomes, chaque hétéroatome pouvant par exemple être choisi parmi O, N, P, Si et S, ledit radical hydrocarboné ne comportant pas de groupement électro-attracteur par effet mésomère conjugué au noyau aromatique.

Dans des variantes de l'invention, dans la formule générale (I) ci-dessus, R'₁, R'₂, R'₃ et R'₄ répondent notamment à l'une ou plusieurs des caractéristiques ci-après, prises seules ou en chacune de leurs combinaisons possibles :
- R'₁ représente la liaison covalente avec le carbone benzylique,
- R'₃ et R'₄ représentent chacun un atome d'hydrogène,
- R'₂ représente un atome d'hydrogène ou R'₂ représente un groupement alkyle, notamment à chaîne linéaire, de préférence en C1-C18, de préférence encore en C1-C10, et préférentiellement en C1-C4. En particulier R'₂ peut représenter un radical méthyle ou un groupement éthyle.

En particulier, dans la formule générale (I), trois substituants parmi R'₁, R'₂, R'₃ et R'₄ peuvent représenter tous trois un atome d'hydrogène, le composé selon l'invention répondant alors à la formule générale (la) : 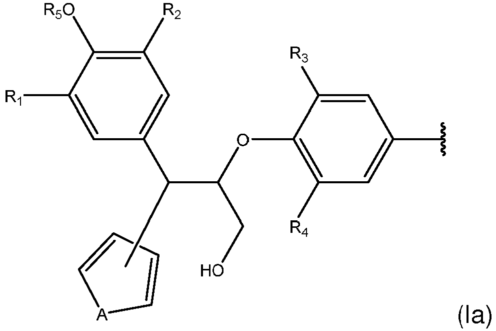 dans laquelle A, R₁, R₂, R₃, R₄ et R₅ sont tels que décrit précédemment.

En particulier, dans cette formule générale (la), R'₂, R'₃ et R'₄ peuvent représenter tous trois un atome d'hydrogène, et R'₁ peut représenter la liaison covalente avec le carbone benzylique.

Dans des variantes de l'invention, A, R₁, R₂, R₃, R₄, R₅ et R'₁, R'₂, R'₃ et R'₄, sont tels que défini ci-avant en référence à la formule générale (I), au moins un groupement parmi R'₁, R'₂, R'₃ et R'₄ ne représentant cependant ni un atome d'hydrogène ni la liaison covalente avec le carbone benzylique. Le ou les groupements parmi R'₁, R'₂, R'₃ et R'₄ ne représentant ni un atome d'hydrogène ni la liaison covalente avec le carbone benzylique peuvent alors représenter un groupement alkyle, notamment en C1-C4, par exemple un groupement méthyle ou un groupement éthyle.

Le dérivé de lignine selon l'invention peut en particulier être tel que, dans la formule générale (I), deux groupements parmi R'₁, R'₃ et R'₄ représentent chacun un atome d'hydrogène, le troisième de ces groupements représentant la liaison covalente avec le carbone benzylique, et R'₂ représente un groupement alkyle, notamment à chaîne linéaire, de préférence en C1-C18, de préférence encore en C1-C10, et préférentiellement en C1-C4. En particulier, R'₂ peut alors représenter un radical méthyle, le composé répondant alors à la formule générale (Ib) ci-après, dans laquelle A, R₁, R₂, R₃, R₄ et R₅ sont tels que défini ci-dessus :

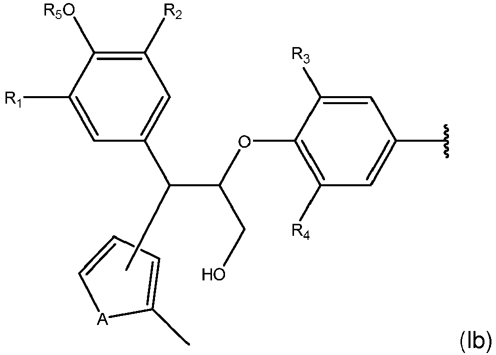

Le dérivé de lignine selon l'invention peut en particulier être tel que, dans la formule générale (I), R'₃ et R'₄ représentent chacun un atome d'hydrogène, R'₁ représente la liaison covalente avec le carbone benzylique, et R'₂ représente un groupement alkyle, notamment à chaîne linéaire, de préférence en C1-C18, de préférence encore en C1-C10, et préférentiellement en C1-C4.

Dans la formule générale (I), A peut représenter un atome d'oxygène. Le noyau aromatique fixé sur la macromolécule de lignine est alors le furane, ou un dérivé du furane. Ces composés présentent notamment les avantages d'être biosourcés, organosolubles et de présenter une réactivité suffisante à des températures modérées, c'est-à-dire de l'ordre d'environ 40 à 60 °C, pour que la réaction de substitution se produise sur le carbone benzylique, en position α de l'unité constitutive de la lignine.

Le dérivé de lignine selon l'invention répond alors à la formule générale (Ic) : 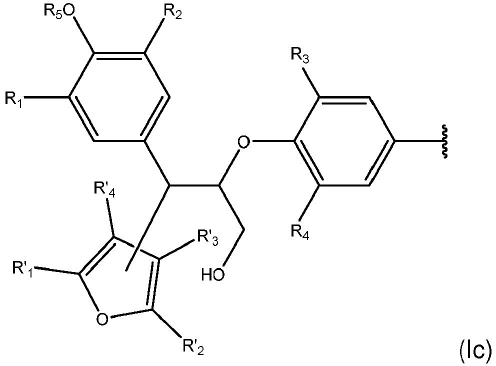 dans laquelle R₁, R₂, R₃, R₄ et R₅, et R'₁, R'₂, R'₃ et R'₄, sont tels que décrit précédemment.

Dans des variantes de l'invention, A représente un atome d'oxygène, R'₁ représente la liaison covalente avec le carbone benzylique, R'₂ représente un groupement alkyle en C1-C18, notamment en C1-C7, en particulier en C1-C4, par exemple un groupement méthyle ou un groupement n-pentyle, et R'₃ et R'₄ représentent chacun un atome d'hydrogène. Le dérivé de lignine, dans lequel la lignine est alors fonctionnalisée par un dérivé du furane, répond alors à la formule générale (Ic') : 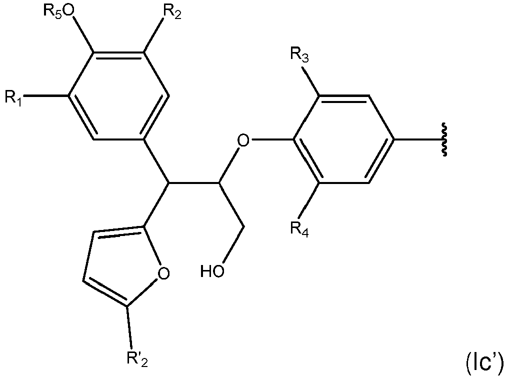 dans laquelle R₁, R₂, R₃ et R₄ sont tels que décrit précédemment, et R'₂ représente un groupement alkyle en C1-C18, notamment en C1-C7, par exemple un groupement méthyle ou un groupement n-pentyle.

Préférentiellement, lorsque dans la formule générale (I), A représente un atome d'oxygène, R'₁, R'₂ et l'un parmi R'₃ et R'₄ ne représentent pas simultanément tous trois un groupement méthyle.

Dans la formule générale (I), A peut représenter un groupement -NR'. Le noyau aromatique fixé sur la macromolécule de lignine est alors le pyrrole, ou un dérivé du pyrrole. Le dérivé de lignine selon l'invention répond alors à la formule générale (Id) : 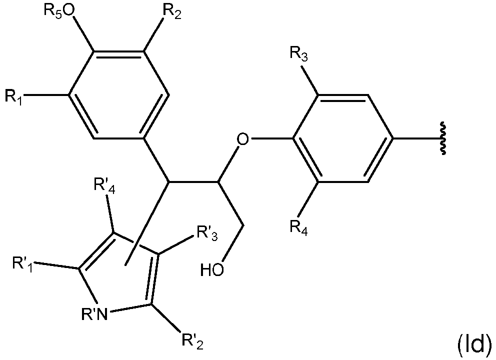 dans laquelle R₁, R₂, R₃, R₄ et R₅, et R', R'₁, R'₂, R'₃ et R'₄, sont tels que décrit précédemment.

Dans une variante de l'invention, A représente un groupement -NR', où R' représente un atome d'hydrogène ou un radical alkyle en C1-C4, en particulier un groupement méthyle, R'₁ représente la liaison covalente avec le carbone benzylique, et R'₂, R'₃ et R'₄ représentent chacun un atome d'hydrogène. Le dérivé de lignine, dans lequel la lignine est alors fonctionnalisée par le pyrrole, répond alors à la formule générale (Id') : 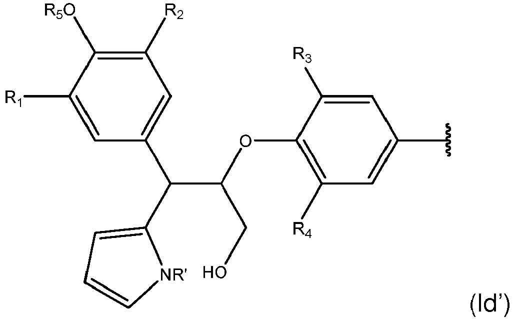 dans laquelle R₁, R₂, R₃, R₄ et R₅ sont tels que décrit précédemment.

Dans une autre variante de l'invention, A représente un groupement - NR', où R' représente un atome d'hydrogène ou un radical alkyle en C1-C4, R'₁ représente la liaison covalente avec le carbone benzylique, R'₂, R'₃ et R'₄ représentent chacun un groupement alkyle, de préférence en C1-C4, et par exemple un groupement méthyle ou un groupement éthyle. En particulier, dans la formule générale (I), A peut représenter un groupement -NH ou un groupement -NMe, R'₁ peut représenter la liaison covalente avec le carbone benzylique, R'₂ et R'₄ peuvent représenter chacun un groupement méthyle et R'₃ peut représenter un groupement éthyle.

Autrement, dans la formule générale (I), A peut représenter un groupement -NMe, R'₁ peut représenter la liaison covalente avec le carbone benzylique, et R'₂, R'₃ et R'₄ peuvent représenter chacun un atome d'hydrogène.

Dans la formule générale (I), A peut autrement représenter un atome de soufre. Le noyau aromatique fixé sur la macromolécule de lignine est alors le thiophène, ou un dérivé du thiophène.

Le dérivé de lignine selon l'invention répond alors à la formule générale (le) : 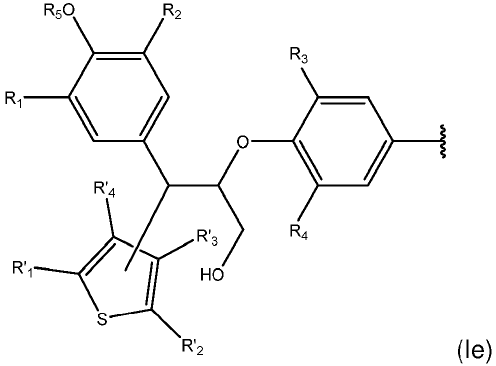 dans laquelle R₁, R₂, R₃, R₄ et R₅, et R'₁, R'₂, R'₃ et R'₄, sont tels que décrit précédemment.

En particulier, dans la formule générale (I), A peut représenter un atome de soufre, R'₁ peut représenter la liaison covalente avec le carbone benzylique, R'₃ et R'₄ peuvent représenter chacun un atome d'hydrogène et R'₂ peut représenter un groupement éthyle.

Le dérivé de lignine selon l'invention, chimiquement stable et pouvant avantageusement être disponible en grande quantité, trouve utilité en lui-même pour un grand nombre d'applications.

Il peut en particulier être facilement fonctionnalisé, aussi bien en conditions acides, que neutres ou alcalines, en vue de la préparation de produits actifs tirant avantageusement profit des propriétés liées non seulement à la présence dans sa structure d'un squelette de lignine, à structure aromatique comportant de nombreux motifs phénols et/ou phényléthers, mais également du noyau aromatique greffé sur ce squelette. Notamment, des substituants comportant des groupements électro-attracteurs tels que, par exemple, ceux exclus pour le noyau aromatique du composé de formule générale (I), pourront être introduits dans sa structure pour conférer à ce composé des fonctionnalités supplémentaires.

A titre d'exemple, le dérivé de lignine selon l'invention peut être fonctionnalisé au niveau du motif métallole, par exemple par un acide gras, lui conférant une plus grande lipophilie. Le dérivé de lignine selon l'invention trouve alors par exemple application dans le domaine du traitement de surface.

Le dérivé de lignine selon l'invention constitue en outre un composé de départ pour l'obtention de nombre de molécules d'intérêt.

Il trouve notamment application, fonctionnalisé ou non, dans le domaine des matériaux, notamment des adhésifs et résines, en remplacement des phénols classiquement mis en œuvre, tirant en particulier profit de ses propriétés particulièrement avantageusement en termes de résistance mécanique, et/ou de ses propriétés d'hydrophobie.

Lorsque dans la formule générale (I), A représente un atome d'oxygène, le dérivé de lignine répondant à cette formule présente avantageusement une lipophilie accrue, qui facilite considérablement son extraction, notamment par des solvants organiques.

Selon un autre aspect, la présente invention concerne un procédé de préparation d'un dérivé de lignine, notamment d'un dérivé de lignine répondant à la formule générale (I) ci-avant. Selon ce procédé, on fait réagir de la lignine avec un composé de formule générale (II) : 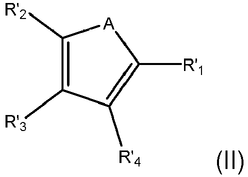 dans laquelle
A représente un atome d'oxygène, un atome de soufre ou un groupement -NR', où R' représente un atome d'hydrogène ou un substituant ne comportant pas de groupement électro-attracteur par effet mésomère conjugué au noyau aromatique, notamment un groupement alkyle, de préférence en C1-C4, par exemple un groupement méthyle,
R'₁, R'₂, R'₃ et R'₄, identiques ou différents, représentent chacun un atome d'hydrogène ou un substituant ne comportant pas de groupement électro-attracteur par effet mésomère conjugué au noyau aromatique,
au moins un substituant parmi R'₁, R'₂, R'₃ et R'₄ représentant un atome d'hydrogène,
ou un de ses sels,
de sorte à réaliser la substitution d'un groupement hydroxyle de la lignine, en particulier d'un groupement porté par un carbone benzylique, par ledit composé de formule générale (II).

On englobe ici, dans l'expression « groupement hydroxyle », aussi bien les groupements hydroxyles libres, que ceux se présentant dans la molécule de lignine sous forme modifiée, notamment sous forme d'éther ou d'ester.

Le procédé selon l'invention peut mettre en œuvre un seul composé de formule générale (II) ci-dessus, ou une pluralité de tels composés, simultanément ou successivement.

Par le terme lignine, on englobe selon la présente invention aussi bien une lignine unique, qu'un mélange de différentes lignines.

De plus, par le terme lignine, on entend aussi bien la lignine essentiellement pure, non modifiée, que ses dérivés. Le terme dérivés englobe selon la présente invention les produits de fractionnement partiel de la lignine, contenant une unité de formule générale (III) : 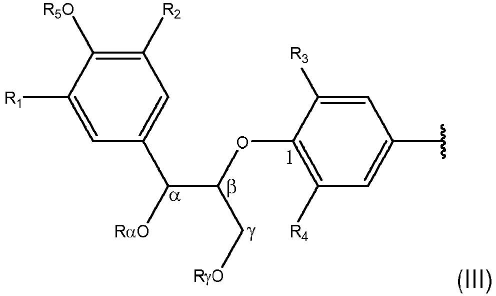
dans laquelle Rα, Rγ, R₁, R₂, R₃, R₄ et R₅ sont tels que décrit précédemment,
ainsi que les dérivés chimiques de la lignine, notamment les dérivés estérifiés ou éthérifiés, dans lesquels, toutefois, des groupements hydroxyles situés sur les carbones benzyliques, en position α, restent de préférence, mais non nécessairement, non modifiés.

La lignine peut notamment être mise en œuvre dans le procédé selon l'invention sous forme d'un sel, ou encore sous forme d'un extrait brut, c'est-à-dire de biomasse lignocellulosique, ou bien encore sous forme d'un extrait partiellement purifié, la contenant en mélange avec d'autres composants, ou d'un extrait sensiblement pur. Un tel extrait peut être obtenu selon toute méthode classique en elle-même pour l'homme du métier, par exemple mise en œuvre en conditions acides ou neutres. Par exemple, la lignine peut être mise en œuvre dans le procédé selon l'invention sous forme partiellement purifiée par les méthodes connues sous le nom de procédés Organosolv.

Selon le procédé conforme à l'invention, le composé de formule générale (II) est mis en présence de la lignine dans des conditions réactionnelles, en particulier de température, de temps et de pH, telles qu'il est provoqué sa réaction avec la lignine, menant à la substitution de groupements hydroxyles (le cas échéant sous forme modifiée, par exemple d'éthers ou d'esters) de cette dernière par le réactif nucléophile de formule générale (II), en particulier au niveau du carbone benzylique, c'est-à-dire situé en position α par rapport à la liaison glycérol-β-*O*-4-aryl. Dans le procédé selon l'invention, le composé de formule générale (II) ne joue pas un rôle de solvant pour la lignine, mais bien de réactif produisant avec cette dernière une réaction chimique irréversible.

Le couplage de la lignine avec le composé nucléophile de formule générale (II) peut être vérifié, à l'issue de la réaction, par des méthodes d'analyse adaptées, telles que la Résonnance Magnétique Nucléaire (RMN) ou la chromatographie en phase gazeuse couplée à la spectrométrie de masse (GC-MS), en recherchant sur la molécule de lignine, avant et après la réaction, l'évolution de signaux marqueurs de ce couplage. En particulier, les déplacements, en RMN du proton, de l'atome d'hydrogène (Hα) porté par l'atome de carbone benzylique et, en RMN du carbone, de l'atome de carbone benzylique (Cα) de la lignine, sont modifiés après réaction de la lignine avec le composé nucléophile. Ces déplacements peuvent en particulier varier de 0,3 à 0,6 ppm pour Hα et de quelques dizaines de ppm pour Cα, ce qui rend leur détection particulièrement aisée.

La substitution de groupements hydroxyles de la lignine par le réactif nucléophile de formule générale (II) peut notamment permettre de supprimer la réactivité de groupements hydroxyles de la lignine, en particulier benzyliques, par une élimination pure et simple de ces groupements, ce qui a pour effet de stabiliser chimiquement le dérivé de lignine obtenu.

Dans des modes de mise en œuvre particuliers, le procédé selon l'invention peut notamment se traduire par le schéma réactionnel suivant :

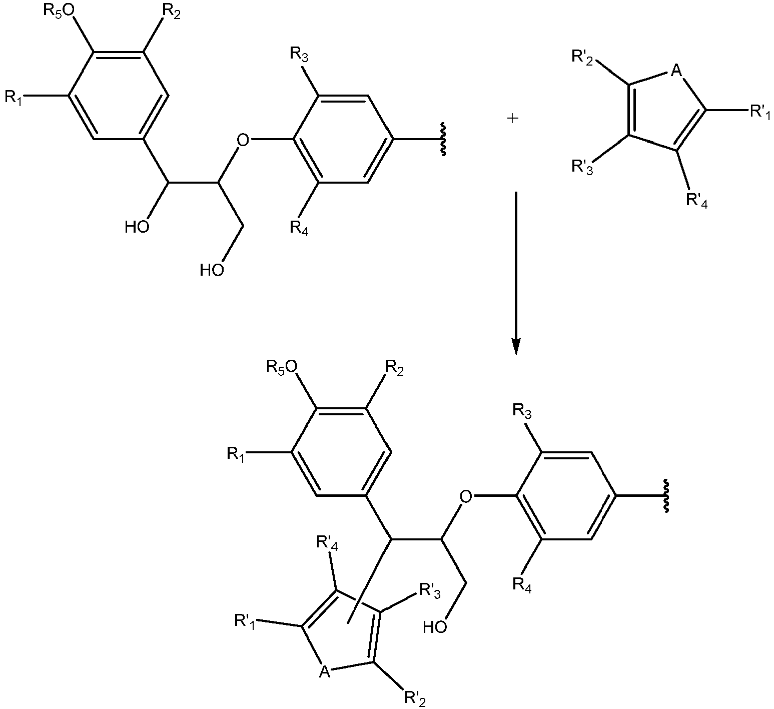

En particulier, dans la formule générale (II), R'₁, R'₂, R'₃ et R'₄ peuvent répondre à l'une des caractéristiques ci-après, ou à toute combinaison de plusieurs de ces caractéristiques techniquement compatibles :
- R'₁ et R'₂, identiques ou différents, représentent chacun :
   - un atome d'hydrogène,
   - ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes ;
- R'₃ et R'₄, identiques ou différents, représentent chacun :
   - un atome d'hydrogène,
   - un groupement comportant un radical électro-donneur lié directement ou par conjugaison au noyau aromatique, par exemple choisi parmi un radical amino, thio ou oxy, notamment lorsque A représente un atome d'oxygène ou un atome de soufre, ce groupement étant éventuellement substitué,
   - ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes ;
- au moins deux substituants parmi R'₁, R'₂, R'₃ et R'₄ représentent un atome d'hydrogène ;
- R'₁, R'₂, R'₃ et R'₄, identiques ou différents, représentent chacun un atome d'hydrogène ou un radical hydrocarboné linéaire ou ramifié, éventuellement substitué, éventuellement interrompu par un ou plusieurs hétéroatomes et/ou par un ou plusieurs groupements comprenant un ou plusieurs hétéroatomes, ledit radical hydrocarboné ne comportant pas de groupement électro-attracteur par effet mésomère conjugué au noyau aromatique ;
- R'₁, R'₃ et R'₄ représentent chacun un atome d'hydrogène ;
- R'₂ représente un groupement alkyle, notamment à chaîne linéaire, de préférence en C1-C18, de préférence encore en C1-C10, et préférentiellement en C1-C4 ; R'₂ représentant par exemple un radical méthyle ou un radical éthyle ;
- R'₂ représente un atome d'hydrogène ;
- au moins un groupement parmi R'₁, R'₂, R'₃ et R'₄ ne représente pas un atome d'hydrogène.

Dans des modes de mise en œuvre particuliers de l'invention, dans la formule générale (II) :
- R'₁ représente un atome d'hydrogène ;
- R'₂ représente un atome d'hydrogène ou un groupement alkyle, notamment à chaîne linéaire, de préférence en C1-C18, de préférence encore en C1-C10, et préférentiellement en C1-C4, par exemple un radical méthyle ou un radical éthyle ;
- R'₃ et R'₄ représentent chacun un atome d'hydrogène.

Dans des modes de mise en œuvre particuliers de l'invention, dans la formule générale (II), A représente un atome d'oxygène. Le composé de formule générale (II) est alors le furane (dans lequel R'₁, R'₂, R'₃ et R'₄ représentent tous un atome d'hydrogène), ou un dérivé du furane, tel que le sylvane (dans lequel R'₂ représente un groupement méthyle).

Le furane et ses dérivés présentent notamment l'avantage d'être, tout comme les lignines, biosourcés : ils peuvent être issus de la biomasse, en particulier de produits dérivés du furaldéhyde, ce dernier étant issu de procédés de déshydratation de pentoses (notamment issus des xylanes), ou bien présents sous forme de groupements furaniques dans certains lipides comme décrit par exemple par Liengprayoon et al., 2011, dans Phytochemistry 72, 1902-1913. Le furane, de même que ses dérivés, s'inscrivent par conséquent particulièrement bien dans un procédé répondant aux principes d'une chimie verte et durable.

Lorsque dans la formule générale (II), A représente un atome d'oxygène, R'₁, R'₂, R'₃ et R'₄ peuvent par exemple être tels que, dans la formule générale (II) : R'₁ représente un atome d'hydrogène, R'₂ représente un groupement alkyle en C1-C18, notamment en C1-C7, par exemple un groupement méthyle ou un groupement n-pentyle, et R'₃ et R'₄ représentent chacun un atome d'hydrogène.

Préférentiellement, lorsque dans la formule générale (II), A représente un atome d'oxygène, R'₁, R'₂ et l'un des groupements parmi R'₃ et R'₄ ne représentent pas simultanément tous trois un groupement méthyle, et l'autre des groupements parmi R'₃ et R'₄ représente un atome d'hydrogène.

Dans des modes de mise en œuvre particuliers de l'invention, dans la formule générale (II), A représente un atome d'oxygène, R'₁ représente un atome d'hydrogène, et l'un au moins de R'₂, R'₃ et R'₄, et notamment deux groupements parmi R'₂, R'₃ et R'₄, représente(nt) un groupement alkyl en C1-C4, en particulier un groupement méthyl ou un groupement éthyl.

Autrement, R'₁ et R'₂ peuvent représenter chacun un groupement alkyl en C1-C4, en particulier un groupement méthyl ou un groupement éthyl, et l'un au moins parmi R'₃ et R'₄ peut représenter un atome d'hydrogène.

Le composé de formule générale (II) peut par exemple être choisi parmi le 2-méthylfurane, le 2-éthylfurane, le 2,3-diméthylfurane et le 2,5-diméthylfurane.

Dans des modes de mise en œuvre particuliers de l'invention, dans la formule générale (II), A représente un atome de soufre. Le composé de formule générale (II) est alors le thiophène (dans lequel R'₁, R'₂, R'₃ et R'₄ représentent tous un atome d'hydrogène), ou un dérivé du thiophène.

Par exemple, dans la formule générale (II), A peut représenter un atome de soufre, R'₁, R'₃ et R'₄ peuvent représenter chacun un atome d'hydrogène et R'₂ peut représenter un groupement éthyle. Le composé de formule générale (II) est alors le 2-éthylthiophène.

Dans d'autres modes de mise en œuvre particuliers de l'invention, dans la formule générale (II), A représente un groupement -NR', où R' représente un atome d'hydrogène ou un substituant ne comportant pas de groupement électro-attracteur par effet mésomère conjugué au noyau aromatique, notamment un radical alkyle en C1-C4, par exemple un groupement méthyle. Le composé de formule générale (II) est alors le pyrrole (dans lequel A représente un groupement -NH et R'₁, R'₂, R'₃ et R'₄ représentent tous un atome d'hydrogène), ou un dérivé du pyrrole.

Des dérivés du pyrrole pouvant être mis en œuvre dans le cadre de l'invention sont tels que, dans la formule générale (II), A représente un groupement -NR', où R' représente un atome d'hydrogène ou un substituant ne comportant pas de groupement électro-attracteur par effet mésomère conjugué au noyau aromatique, notamment un radical alkyle en C1-C4, par exemple un groupement méthyle, R'₁ représente la liaison covalente avec le carbone benzylique, R'₂, R'₃ et R'₄ représentent chacun un groupement alkyle, de préférence en C1-C4, et par exemple un groupement méthyle ou un groupement éthyle.

Dans une variante de l'invention, A représente un groupement -NR', où R' représente un atome d'hydrogène ou un radical alkyle en C1-C4, en particulier un groupement méthyle, et R'₁, R'₂, R'₃ et R'₄ représentent chacun un atome d'hydrogène. Le composé de formule générale (II) peut par exemple être le N-méthylpyrrole.

En particulier, dans la formule générale (II), A peut représenter un groupement -NH ou un groupement -NMe, R'₁ peut représenter un atome d'hydrogène, R'₂ et R'₄ peuvent représenter chacun un groupement méthyle et R'₃ peut représenter un groupement éthyle. Le composé de formule générale (II) peut par exemple être le 2,4-diméthyl-3-éthyl-pyrrole.

Le procédé selon l'invention est particulièrement simple à mettre en œuvre, et ce à faible coût. Il est en outre particulièrement respectueux de l'environnement.

Le procédé selon l'invention peut être mis en œuvre directement sur de la biomasse lignocellulosique, par exemple sur de la sciure de bois, c'est-à-dire sans étape d'extraction préalable de la lignine à partir de cette biomasse. Il constitue alors notamment un traitement d'hydrophobation du bois.

Dans une telle configuration, le procédé selon l'invention peut comporter, en étape finale, une étape d'extraction du dérivé de lignine obtenu à partir de la biomasse. Toute méthode classique en elle-même peut être mise en œuvre à cet effet.

Le procédé selon l'invention peut autrement être mis en œuvre sur de la lignine qui a été au préalable extraite de biomasse lignocellulosique, par exemple en milieu acide ou neutre, telle que de la lignine Organosolv.

Le procédé selon l'invention peut autrement encore être mis en œuvre simultanément à un procédé d'extraction de lignine à partir de biomasse lignocellulosique, c'est-à-dire pendant des étapes d'extraction de la lignine à partir de biomasse la contenant, simultanément à ces étapes, et dans le même réacteur (réaction dite « en réacteur unique », pour l'anglais « one pot »). Par exemple, le procédé selon l'invention peut être mis en œuvre par ajout du métallole de formule générale (II) dans le réacteur dans lequel se produit l'extraction de lignine à partir de biomasse selon le procédé Organosolv. On obtient ainsi avantageusement directement, à l'issue du procédé d'extraction de lignine à partir de biomasse lignocellulosique, un dérivé de lignine selon la présente invention.

Les paramètres opératoires optimaux exacts du procédé selon l'invention dépendent de la structure particulière du composé de formule générale (II) mis en œuvre. Il est du ressort de l'homme du métier de déterminer ces paramètres de manière appropriée, pour chaque composé particulier, sur la base des caractéristiques préférentielles plus générales énoncées ci-après, afin d'obtenir le meilleur taux de substitution au niveau des carbones benzyliques Cα de la lignine par le composé de formule générale (II).

La quantité exacte de composé de formule générale (II) à mettre en œuvre dépend plus particulièrement de la force nucléophile de ce composé, de la quantité d'atomes de carbone benzyliques (Cα) de la lignine à substituer.

La force nucléophile du composé de formule générale (II) peut être évaluée de manière théorique, par exemple par calcul de l'indice de nucléophilie N de ce composé selon la théorie de la fonctionnelle de la densité (dite DFT, pour l'anglais Density Functional Theory), décrite dans la publication de Domingo et Perez, 2011, dans Org. Biomol. Chem. 9, 7168-7175, et comparaison de cet indice avec celui d'autres composés pour lesquels la force nucléophile a été déterminée expérimentalement, par exemple les composés faisant l'objet des exemples ci-après.

La quantité de carbones benzyliques Cα de la lignine peut être déterminée par la méthode de dérivatisation suivie de clivage réductif, dite de DFRC (pour l'anglais « Derivatization followed by reductive cleavage ») décrite dans la publication de Lu et Ralph, 1997, dans J. Agric. Food Chem. 45, 4655-4660. Cette méthode consiste à substituer sélectivement les groupements - ORα portés par les carbones benzyliques Cα par des atomes de brome. La liaison à l'atome de brome provoque en RMN des déplacements caractéristiques des signaux associés au Cα et au Hα (atome d'hydrogène porté par le carbone benzylique Cα). La quantité de Hα et de Cα peut être dosée en RMN par un étalonnage externe, et ramenée à la masse de lignine extraite.

Le nombre d'équivalents molaires de composé de formule générale (II) mis en œuvre dans le procédé selon l'invention est de préférence supérieur ou égal à la quantité de carbones benzyliques Cα de la lignine.

De manière générale, plus la force nucléophile du composé de formule générale (II) est faible, et plus il est préférable que le nombre d'équivalents molaires de ce composé mis en œuvre dans le procédé selon l'invention soit élevé.

Préférentiellement, le composé de formule générale (II), ou le cas échéant les composés de formule générale (II), est/sont introduit(s) dans le milieu réactionnel dans une quantité telle que le nombre d'équivalents molaires du composé de formule générale (II), ou le cas échéant de l'ensemble des composés de formule générale (II) mis en œuvre, par rapport au nombre de carbones benzyliques de la lignine, est compris entre 2 et 15.

Le procédé selon l'invention peut être mis en œuvre en conditions basiques.

Préférentiellement, la réaction entre la lignine et le composé de formule générale (II) est réalisée en milieu acide, dans des conditions assurant cependant qu'il se produise le moins possible de dégradation des réactifs mis en œuvre.

A cet effet, il peut être utilisé tout type d'acide. La réaction entre la lignine et le composé de formule générale (II) peut par exemple être réalisée en présence d'un acide choisi parmi les acides couramment mis en œuvre dans le domaine industriel, tels que l'acide sulfurique (H₂SO₄), l'acide chlorhydrique (HCl), l'acide méthanesulfonique (MsOH), l'acide formique et l'acide acétique, ou un mélange de tels acides.

Le solvant mis en œuvre pour la réaction entre la lignine et le composé de formule générale (II) peut également être de différents types.

Dans des modes de mise en œuvre particuliers de l'invention, la réaction entre la lignine et le composé de formule générale (II) est réalisée dans un solvant organique, seul ou en mélange avec l'eau. On englobe ici, dans l'expression « solvant organique », les mélanges de solvants organiques.

Le solvant organique mis en œuvre est de préférence polaire, et préférentiellement miscible avec l'eau. Ce solvant peut notamment être choisi parmi les solvants organiques tels que le glyme (diméthoxyéthane), le tétrahydrofurane ou le dioxane, y compris les mélanges de tels solvants organiques, et/ou parmi les alcools, tels que le méthanol, l'éthanol, l'isopropanol, le butanol ou le tertio-butanol, y compris les mélanges d'alcools.

L'étape de réaction entre la lignine et le composé de formule générale (II) est de préférence réalisée à une température inférieure ou égale à la température d'ébullition du composé de formule générale (II) à la pression appliquée dans le réacteur, et à une température inférieure ou égale à la température d'ébullition du solvant à cette même pression. A titre d'exemple, lorsque la réaction est mise en œuvre à pression atmosphérique, des températures comprises entre 30 °C et 65 °C sont particulièrement préférées dans le cadre de l'invention.

Le temps de contact entre la lignine et le composé de formule générale (II) est quant à lui suffisamment long pour permettre à la réaction de substitution des groupements hydroxyles de la lignine visés, par le composé de formule générale (II), de s'effectuer.

Selon un autre aspect, la présente invention concerne un procédé de dépolymérisation de lignine, qui comprend les deux étapes successives de :
- mise en œuvre d'un procédé de préparation d'un dérivé de lignine selon l'invention, répondant à l'une ou plusieurs des caractéristiques ci-avant, de sorte notamment à obtenir un dérivé de lignine, en particulier un dérivé de lignine de formule générale (I),
- et craquage du dérivé de lignine ainsi obtenu.

On entend, par craquage, la dépolymérisation à proprement parler du dérivé de lignine, c'est-à-dire le clivage d'une liaison du squelette polymère de la lignine, donnant lieu à la formation des unités monomères qui en sont constitutives, en particulier le clivage de la liaison glycérol-β-*O*-4-aryl.

L'étape de craquage peut être réalisée par toute méthode classique en elle-même pour l'homme du métier, par exemple par dépolymérisation acidocatalysée (acidolyse), dépolymérisation basocatalysée (hydrolyse en milieu alcalin), dépolymérisation thermocatalysée (thermolyse, pyrolyse), dépolymérisation oxydative (en présence d'un oxydant) ou dépolymérisation réductive (hydrogénolyse).

Lorsque l'étape de craquage / dépolymérisation du dérivé de lignine est réalisée par hydrogénolyse, l'hydrogénolyse peut être réalisée selon toute méthode classique en elle-même pour l'homme du métier. On peut citer au titre de telles méthodes celles décrites dans les publications de Goncalves, et al., 2002, Applied biochemistry and biotechnology 98-100, 1213-1219 ; de Molinar et al., 2016, ACS Catalysis 6 (3), 1663-1670 ; de Torr et al., 2011, Bioresource Technology, 102 (16), 7608-7611; de Shuai et al., 2016 précitée; ou encore de Zhai et al., 2017, Green Chemistry, 19,1895-1903.

Lorsque l'étape de craquage / dépolymérisation du dérivé de lignine est réalisée par hydrolyse, l'hydrolyse peut être réalisée selon toute méthode classique en elle-même pour l'homme du métier. On peut citer au titre de telles méthodes celle décrite dans la publication précitée de Roberts et al., 2011.

Lorsque l'étape de craquage / dépolymérisation du dérivé de lignine est réalisée par acidolyse, cette étape peut aussi bien être réalisée dans un solvant non aqueux que dans un solvant aqueux, par exemple en milieu alcoolique. Cette réaction peut être réalisée de toute manière classique en elle-même, par exemple comme décrit dans la publication de Vuori et al. 1988, Holzforschung, 42: 327-334.

Lorsque l'étape de craquage / dépolymérisation du dérivé de lignine est réalisée par pyrolyse, la température appliquée peut par exemple être comprise entre 350 et 1200 °C. Là encore, toute méthode classique en elle-même pour l'homme du métier peut être mise en œuvre, par exemple celles décrites dans la publication de Pandey et al., 2011, Chemical Engineering & Technology, 34: 29-41.

De manière plus générale, l'étape de craquage / dépolymérisation du dérivé de lignine peut être réalisée par toute méthode décrite dans la revue de Sun et al., 2016, Chemical Reviews., 118: 614-678.

Selon l'invention, l'étape de craquage / dépolymérisation peut également être mise en œuvre sur un dérivé de lignine comprenant une unité répondant à la formule générale (I) obtenu par un procédé différent du procédé de préparation d'un dérivé de lignine selon la présente invention.

Dans des modes de mise en œuvre particuliers de l'invention, les deux étapes ci-dessus sont réalisées successivement dans le même réacteur. Préférentiellement, aucune étape, notamment de purification, ou le cas échéant de changement de solvant, n'est intercalée entre ces deux étapes.

Le procédé de dépolymérisation de la lignine selon l'invention mène avantageusement à l'obtention de monophénols. Selon les conditions de craquage / dépolymérisation appliquées, le noyau aromatique issu du composé de formule générale (II) est conservé intact, ou il subit une hydrogénation contrôlée pour donner lieu à un dérivé non-aromatique cyclique ou ouvert, tout en préservant le noyau phénolique issu de la macromolécule de lignine, ouvrant avantageusement la voie à plusieurs types de dérivés utilisables pour différentes applications.

Un autre aspect de la présente invention concerne un produit de dépolymérisation issu de la lignine susceptible d'être obtenu par un procédé de dépolymérisation de lignine selon l'invention, répondant à l'une ou plusieurs des caractéristiques ci-avant.

Ce produit de dépolymérisation peut notamment être un dérivé du monomère guaiacyl, un dérivé du monomère syringyl ou un dérivé p-hydroxyphényl.

Ce produit de dépolymérisation peut en particulier répondre à l'une des formules générales (IVa) à (IVI) suivantes : 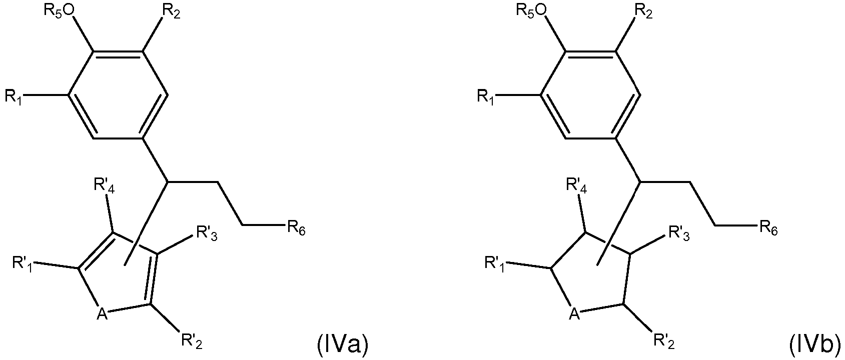 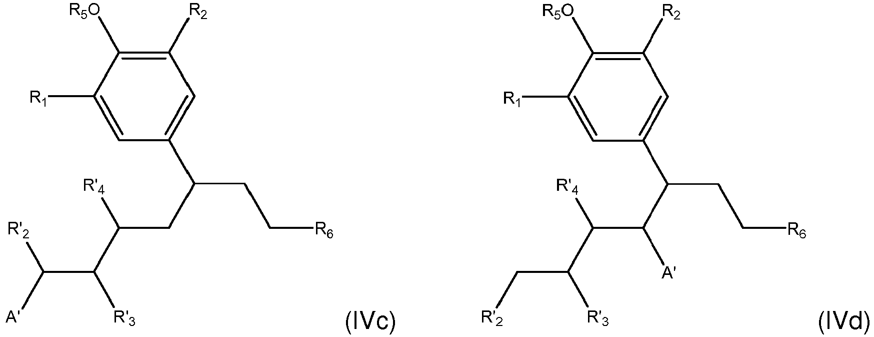 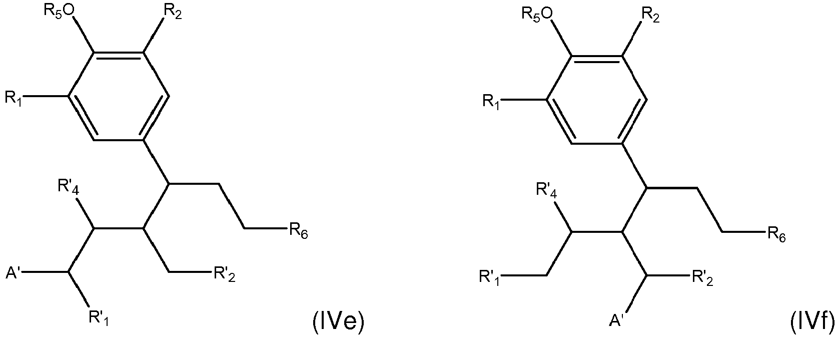 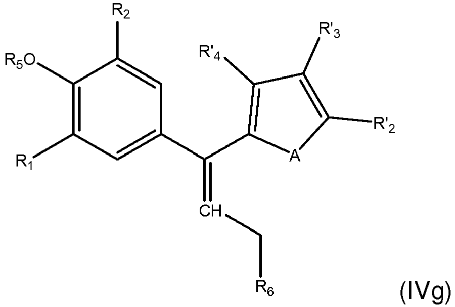 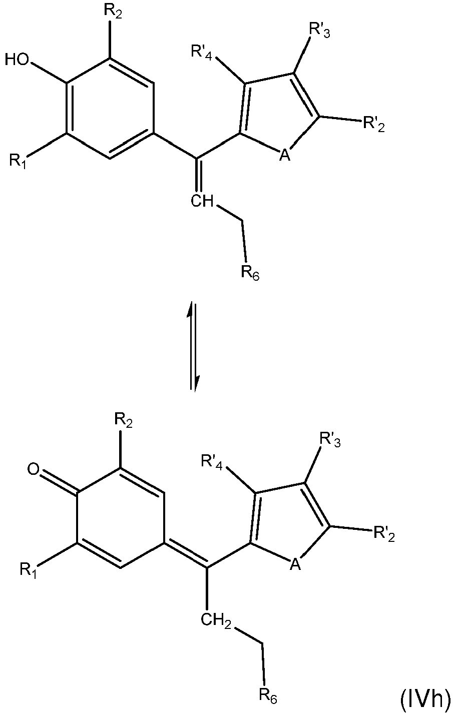 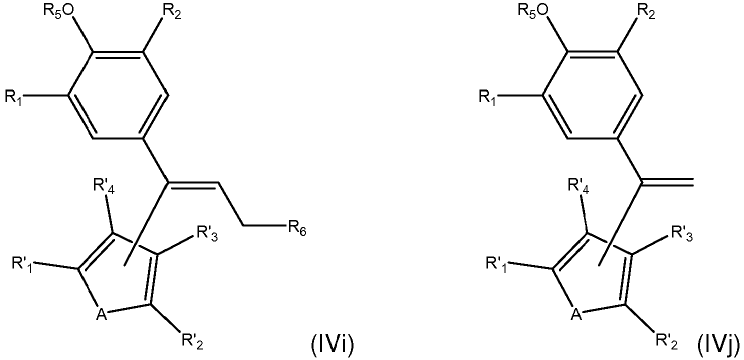 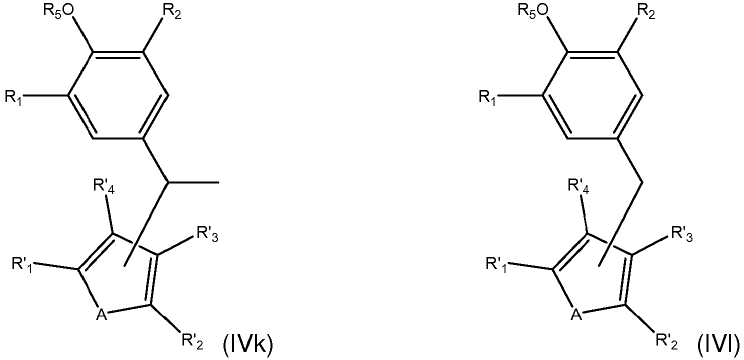 dans lesquelles :
R₁ et R₂, identiques ou différents, représentent chacun un atome d'hydrogène, un groupement méthoxy -OMe ou un groupement hydroxyle, le cas échéant protégé par un groupement protecteur d'une fonction hydroxyle (comme exposé ci-avant, les groupements hydroxyles peuvent avoir été libérés, à partir de la molécule de lignine initiale, par un traitement de déméthylation),
R₅ représente un atome d'hydrogène ou un groupement protecteur d'une fonction hydroxyle,
A représente un atome d'oxygène, un atome de soufre ou un groupement -NR', où R' représente un atome d'hydrogène ou un substituant ne comportant pas de groupement électro-attracteur par effet mésomère conjugué au noyau aromatique,
R₆ représente un atome d'hydrogène ou un groupement hydroxyle,
R'₁, R'₂, R'₃ et R'₄, identiques ou différents, représentent chacun un atome d'hydrogène ou un substituant ne comportant pas de groupement électro-attracteur par effet mésomère conjugué au noyau aromatique, un substituant parmi R'₁, R'₂, R'₃ et R'₄ représentant la liaison covalente avec le carbone benzylique pour les produits de dépolymérisation de formules générales (IVa) et (IVb),
A' représente un atome d'hydrogène, un groupement -OH, un groupement -SH ou un groupement -NHR', où R' représente un atome d'hydrogène ou un substituant ne comportant pas de groupement électro-attracteur par effet mésomère conjugué au noyau aromatique,
ou consister en un de ses sels.

A titre d'exemple, des produits de dépolymérisation pouvant être obtenus conformément à l'invention répondent aux formules suivantes :

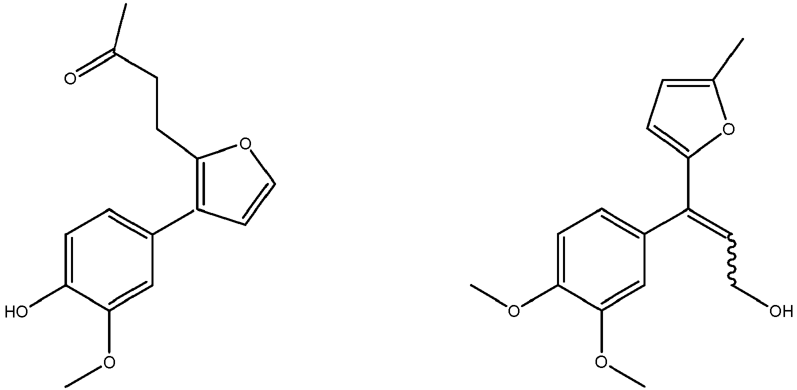

Les produits de dépolymérisation selon l'invention trouvent nombre d'applications, par exemple dans le domaine des matériaux à contact alimentaire.

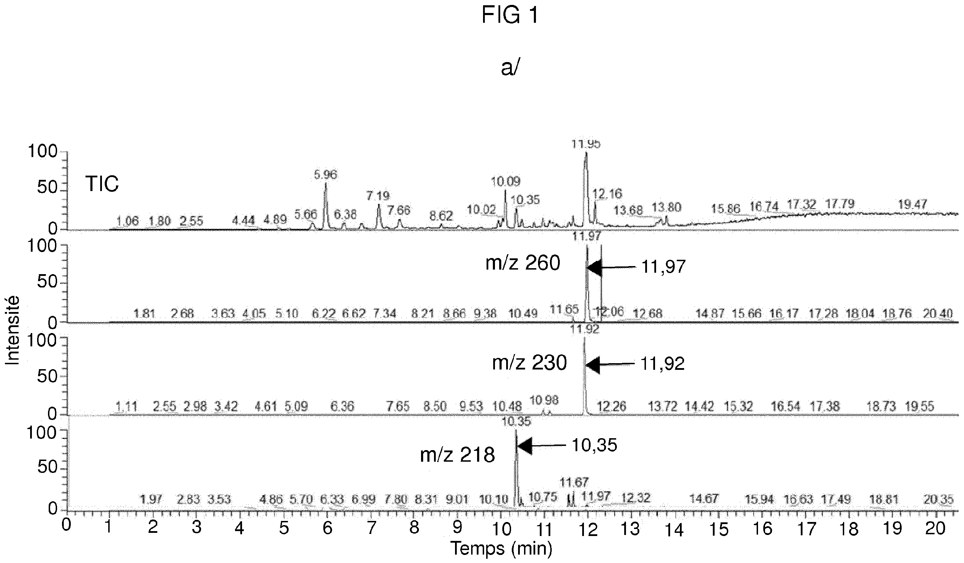

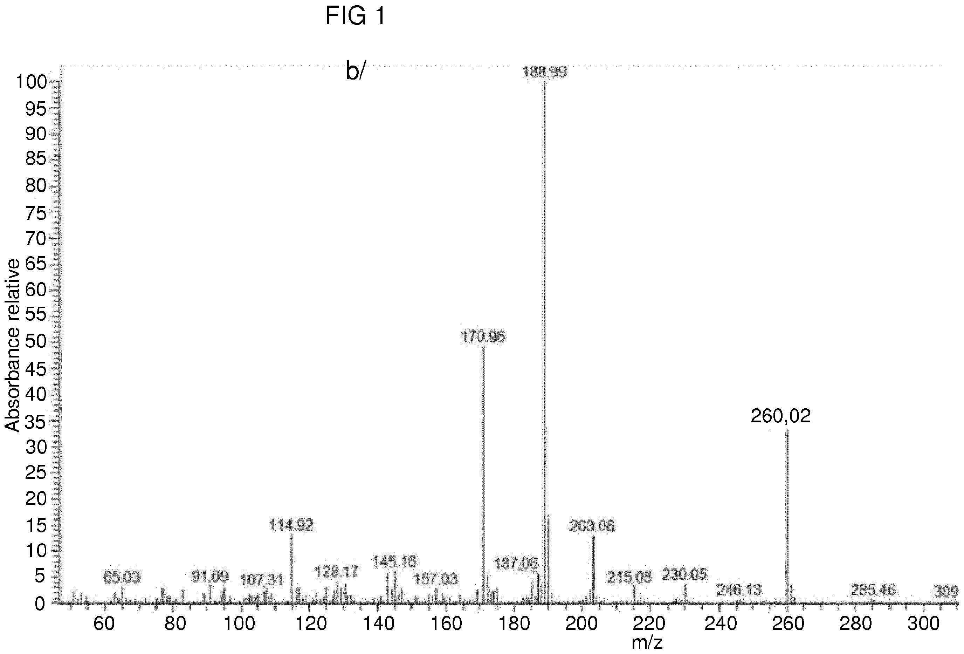

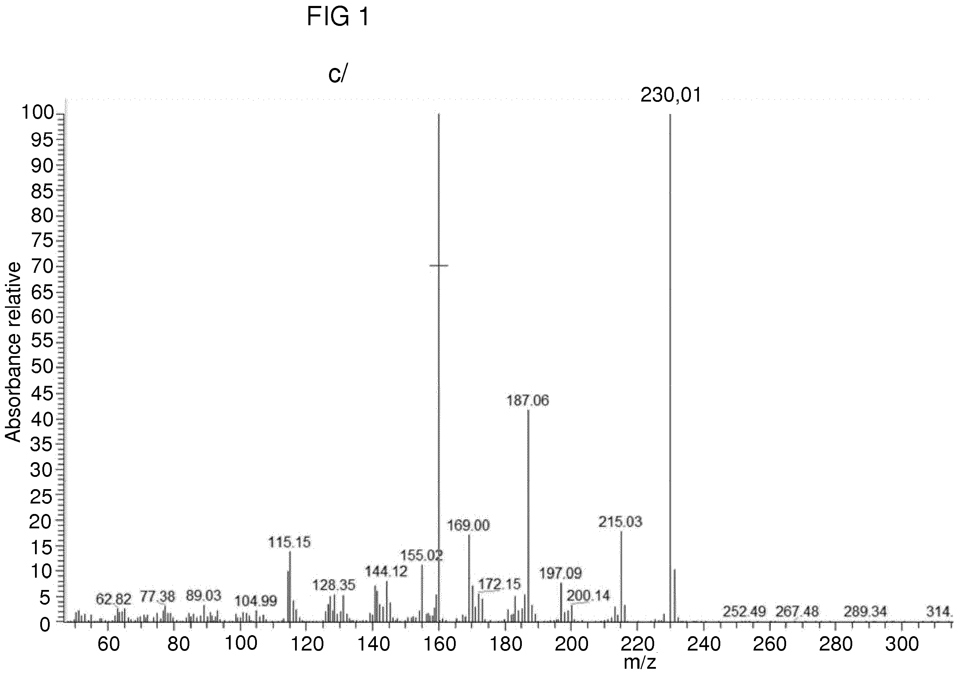

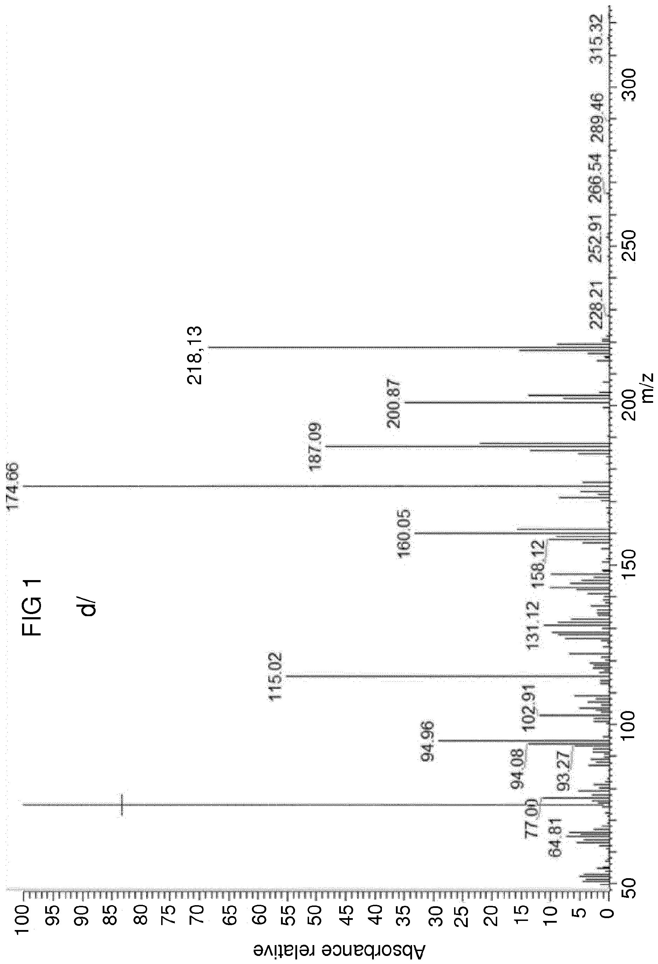

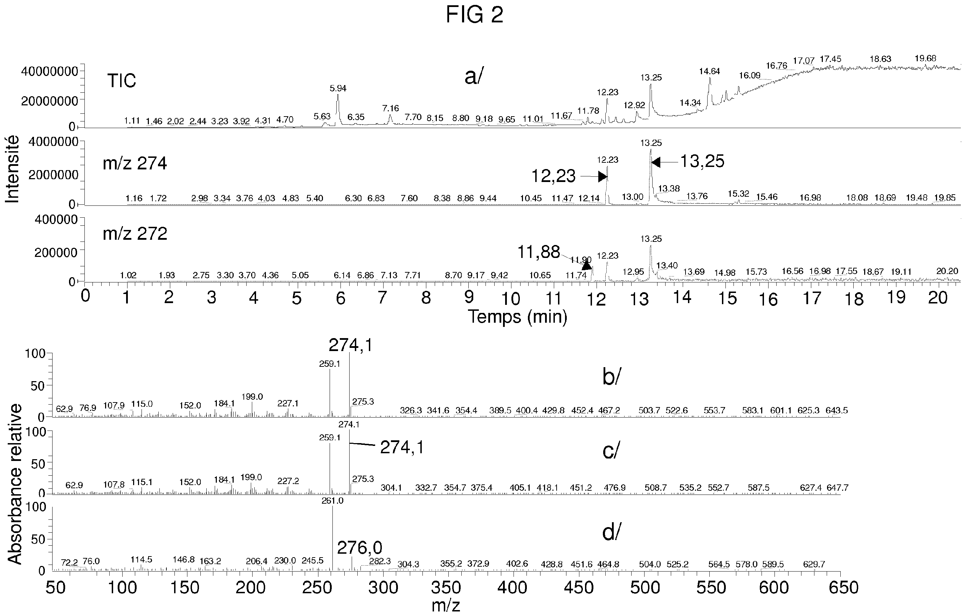

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 et 2, dans lesquelles :
- la figure 1 montre des spectres obtenus lors d'une analyse par couplage Py-CPG-SM d'un produit de condensation du sylvane avec le 1-(4-hydroxy-3-méthoxyphényl)-2-(2-méthoxyphénoxy)propane-1,3-diol, avec en a/ le chromatogramme du courant ionique total (TIC) et les temps de rétention des pics correspondant aux marqueurs m/z 260, m/z 230 et m/z 218 extraits du TIC ; b/ le spectre de masse du pic à 11,97 min (marqueur m/z = 260) ; c/ le spectre de masse du pic à 11,92 min (marqueur m/z = 230) ; d/ le spectre de masse du pic à 10,35 min (marqueur m/z = 218) ;
- et la figure 2 montre des spectres obtenus lors d'une analyse par couplage Py-CPG-SM d'un produit de condensation du 2-éthylthiophène avec le 1-(3,4-diméthoxyphényl)-2-(2-méthoxyphénoxy)propane-1,3-diol, avec en a/ le chromatogramme du courant ionique total (TIC) et les temps de rétention des pics correspondant aux marqueurs m/z 274 et m/z 276 extraits du TIC ; b/ le spectre de masse du pic à 13,25 min (marqueur m/z = 274) ; c/ le spectre de masse du pic à 12,23 min (marqueur m/z = 274) ; d/ le spectre de masse du pic à 11,88 min (marqueur m/z = 276).

Il est réalisé la condensation de métalloles de formule générale (II) avec des modèles de lignine simples : les alcools p-hydroxybenzyliques tels que la gastrodigénine, l'alcool vanillique et l'alcool syringique, le 1-(4-hydroxy-3-méthoxyphényl)-2-(2-méthoxyphénoxy)propane-1,3-diol, et les alcools p-alkoxybenzylique tels que l'alcool anisique, l'alcool vératrique, et l'alcool 3,4,5-triméthoxybenzylique, le 1-(3,4-diméthoxyphényl)-2-(2-méthoxyphénoxy)propane-1,3-diol, conformément à la présente invention. Le procédé selon l'invention est également mis en œuvre à partir d'extraits de lignine, ou à partir de biomasse lignocellulosique.

Les masses des composés obtenus sont vérifiées par spectrométrie de masse avec sonde électrospray ES(+) après purification par chromatographie préparative. Les composés obtenus sont également analysés par RMN ¹H et ¹³C. Les rendements réactionnels sont suivis par HPLC avec détection à 280 nm.

Les protocoles opératoires mis en œuvre sont les suivants.

### PROTOCOLES OPERATOIRES

### Protocoles de mise en œuvre de procédés de préparation d'un dérivé de lignine selon l'invention à partir de modèles de lignine

### Protocole opératoire A - condensation des alcools para-hydroxybenzyliques avec les métalloles

Le mélange réactionnel est préparé en solubilisant l'alcool benzylique et le métallole (15 équivalents molaires) dans le méthanol pour atteindre une concentration finale d'alcool benzylique de 150 mmol.L⁻¹. Cette solution est acidifiée à 0,1 mol.L⁻¹ par de l'acide chlorhydrique fumant (37% aq.). La réaction se poursuit pendant 120 min à 40 °C.

Le mélange réactionnel est neutralisé par l'ajout d'une solution aqueuse d'hydrogénocarbonate de sodium, puis le méthanol et l'excès de métallole sont évaporés sous vide. La suspension aqueuse est alors extraite à l'éther diéthylique, les fractions organiques sont combinées, séchées sur sulfate de sodium, et évaporées sous vide.

L'extrait brut est purifié par chromatographie sur gel de silice par un gradient acétate d'éthyle / éther de pétrole 0→50%.

### Protocole opératoire B - condensation des alcools para-méthoxybenzyliques avec les métalloles

Le mélange réactionnel est préparé en solubilisant l'alcool benzylique et le métallole (15 équivalents molaires) dans le glyme pour atteindre une concentration finale d'alcool benzylique de 150 mmol.L⁻¹. Cette solution est acidifiée à 0,5 mol.L⁻¹ par de l'acide méthanesulfonique anhydre. La réaction se poursuit pendant 15 min à 60 °C.

De l'eau est ajoutée et le produit extrait à l'éther diéthylique, les fractions organiques sont combinées, séchées sur sulfate de sodium, et évaporées sous vide.

L'extrait brut est purifié par chromatographie sur gel de silice par un gradient acétate d'éthyle / éther de pétrole 0→50%.

### Protocoles de prétraitement physique de la matière

### Protocole opératoire C - broyage de la biomasse

La biomasse (sciure de bois de pin Douglas ou tiges de maïs préalablement fragmentées avec un broyeur végétal) est mise dans un broyeur à couteaux de type Retsch SM 100 équipé avec une grille de 1 mm. La sciure de bois de pin Douglas est aussi broyée avec une grille plus fine de 0,25 mm.

### Protocole opératoire D - fragmentation de la sciure de bois de pin Douglas pour obtenir une farine de bois

La dimension moyenne des particules de sciure de bois broyée avec la grille de 0,25 mm est réduite à une dimension micrométrique dans un broyeur Retsch MM 400, en fixant la fréquence à 20 Hz et le temps à 10 min.

### Protocoles de préparation des extraits de lignine

Protocole opératoire E - Extraction des lignines en conditions alcalines Le broyat de matière végétale (100g) est mis en suspension dans l'eau (1L). Une solution de soude (NaOH aq. 0,8% m/m) est ajoutée. L'extraction se poursuit à 70°C pendant 2h sous agitation. Le pH mesuré est de 12 à 13.

Le milieu d'extraction est refroidi, filtré sur Büchner et le résidu solide lavé à l'eau (2x500mL). La liqueur noire ainsi filtrée est acidifiée par l'ajout d'acide chlorhydrique fumant jusqu'à pH 2, et laissée ainsi jusqu'à ce que les lignines précipitent. Les lignines en suspension sont isolées et lavées à l'eau par centrifugation, puis séchées à l'étuve pendant 3 jours à 40°C et pulvérisées au broyeur.

### Protocole opératoire F - Extraction des lignines en conditions acides (Organosolv - Formacell)

Le broyat de matière végétale (100g) est mis en suspension dans de l'acide formique (400mL), de l'acide acétique (500mL) de l'acide chlorhydrique fumant (2mL). L'extraction se poursuit pendant 4h à 90°C. Le milieu d'extraction est refroidi, filtré sur Büchner et le résidu solide lavé. A la solution ainsi filtrée sont ajoutés 8 équivalents volumiques d'eau puis la solution est laissée ainsi jusqu'à ce que les lignines précipitent. Les lignines en suspension sont isolées et lavées à l'eau par centrifugation, puis séchées à l'étuve pendant 3 jours à 40°C et pulvérisées au broyeur.

### Protocoles de mise en œuvre de procédés de préparation d'un dérivé de lignine selon l'invention à partir de biomasse ou extrait de lignine

### Protocole opératoire A' - fonctionnalisation de sciures et farine de bois ou d'extraits de lignines avec les métalloles

La sciure de bois, la farine de bois ou l'extrait de lignines (48mg) est suspendue dans un mélange métallole/méthanol 20% v/v acidifié à 0,1 mol.L⁻¹ d'acide chlorhydrique pour un volume total de 3mL. La suspension est agitée par sonication à 40°C pendant 2h. La suspension est neutralisée par l'ajout d'acétate d'ammonium et évaporée sous vide. Le solide obtenu est directement analysé par pyrolyse et chromatographie en phase gazeuse couplée à la spectrométrie de masse (Py-CPG-SM).

### Protocole opératoire H - fonctionnalisation sans ajout de catalyseur (acide) à haute température et haute pression

Dans 200 mL d'un mélange EtOH/métallole/Eau (70/20/10 v/v%) sont ajoutés 20 g de broyat de la biomasse. Le milieu réactionnel est chauffé à 195°C (22 bar) pendant 1 h. Le milieu réactionnel est refroidi puis filtré sur Büchner. Le résidu solide est ensuite lavé par 4 équivalents volumiques d'eau. La lignine en suspension dans le filtrat est isolée et lavée à l'eau par centrifugation, puis séchée à l'étuve pendant 3 jours à 40°C. Le solide obtenu est directement analysé par Py-CPG-SM.

### Protocole opératoire I - Analyse en couplage Py-CPG-SM

Une quantité pesée d'échantillon est introduite dans un tube de pyrolyse en quartz. Le tube est disposé sur le passeur d'échantillons automatique d'un système de pyrolyse analytique CDS 5250-T équipé de l'option piégeage (CDS Analytical, USA). L'échantillon est pyrolysé sous atmosphère d'hélium dans la chambre de pyrolyse à 600°C pendant 15 s, les composés issus de la pyrolyse étant piégés par adsorption sur un piège en Tenax-TA (trappe) chauffé à 100°C. Après désorption à 250°C pendant 3 min, les composés volatils sont transférés dans l'injecteur d'un chromatographe en phase gazeuse GC Trace® Ultra (Thermo Scientific, USA) via une ligne de transfert chauffée à 280°C, à un débit constant de 1,2 mL/min. L'injecteur est chauffé à 300°C et réglé avec un rapport de division de 8. Les composés volatils sont séparés sur une colonne capillaire Phenomenex Zebron® ZB5-HT Inferno (30m×0,25mm×0,1µm). Le four est programmé à 100°C pendant 3 min, puis la température est augmentée jusqu'à 350°C à 20°C/min, puis maintenue à cette température pendant 5 min. La colonne est reliée via une ligne de transfert chauffée à 325°C à un spectromètre de masse à simple quadrupôle DSQ II (Thermo Scientific). L'acquisition des spectres de fragmentation obtenus par ionisation électronique à 70 eV est réalisée en mode balayage full scan sur une gamme allant de 46 à 650 m/z.

### Protocoles de procédés de craquage de dérivés de lignine selon l'invention

### Protocole opératoire J - Acidolyse (dépolymérisation acido-catalysée)

Une solution contenant le dérivé de lignine selon l'invention à une concentration finale de 10 g/L et de l'acide méthanesulfonique à 0,1 mol/L dans le méthanol est agitée et chauffée à reflux (65°C) pendant 3 à 4 h. La formation du produit correspondant à la rupture de la liaison β-O-4 est suivie par analyse en couplage chromatographie liquide à haute performance / détecteur à barrettes de diodes / spectrométrie de masse (UPLC-DAD-MS). Un volume équivalent d'eau est ajouté au mélange réactionnel et le méthanol est évaporé sous vide. La solution aqueuse est extraite 3 fois par 1 volume équivalent d'éther diéthylique. Les phases organiques sont rassemblées, séchées sur sulfate de sodium, filtrées sur laine de verre et évaporées à sec sous vide. Le produit brut est purifié par chromatographie basse pression.

### Protocole opératoire K - Alcanolyse (dépolymérisation baso-catalysée)

Une solution méthanolique contenant le dérivé de lignine selon l'invention à une concentration finale de 10g/L et NaOH 1M est agitée et chauffée à 100°C dans un tube SVL fileté, bouché hermétiquement pendant 7 à 8 h. La formation du produit correspondant à la rupture de la liaison β-O-4 est suivie par analyse en couplage UPLC-DAD-MS. Un volume équivalent d'eau est ajouté au mélange réactionnel et le méthanol est évaporé sous vide. La solution aqueuse est extraite 3 fois par 1 volume équivalent d'éther diéthylique. Les phases organiques sont rassemblées, séchées sur sulfate de sodium, filtrées sur laine de verre et évaporées à sec sous vide. Le produit brut est purifié par chromatographie basse pression.

### Protocole opératoire L - pyrolyse (dépolymérisation thermochimique)

Une masse d'un extrait de lignine (contenant ou non un dérivé de lignine selon l'invention) est placée dans une nacelle en quartz, elle-même mise dans un réacteur à four rotatif pour réaliser les expériences de pyrolyse. Avant chaque essai expérimental, le réacteur est purgé avec de l'azote pendant 30 min pour assurer un environnement sans oxygène. Ensuite, les expériences sont effectuées à 500°C, en appliquant une vitesse de chauffage d'approximativement 20°C/min. Le temps de séjour à la température maximale était de 10 min à la pression atmosphérique, sous atmosphère inerte.

### EXEMPLES

### Exemple 1 - Sylvanylation de la gastrodigénine

La sylvanylation, c'est-à-dire la réaction avec le sylvane de formule générale (IIa) : 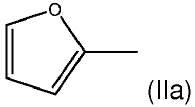
dans laquelle, par rapport à la formule générale (II) ci-avant, A représente un atome d'oxygène, R'₂ représente un groupement méthyle et R'₁, R'₃ et R'₄ représentent des atomes d'hydrogène,
est réalisée selon le protocole opératoire A, sur 1,86 g de gastrodigénine, de formule générale :

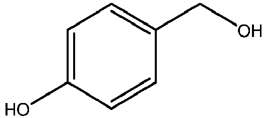

On obtient le dérivé sylvanylé de formule générale : 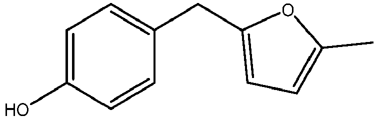 dans lequel le groupement hydroxyle porté par le carbone benzylique a été substitué par le sylvane.

Ce dérivé se présente sous forme d'une huile jaune sombre.

Le rendement de la réaction est supérieur à 95 %. Après purification par chromatographie préparative, 1,12 g de composé sont obtenus.
RMN ¹H δ : 7,13 (2H, *Ar);* 6,78 (2H, *Ar);* 5,87 (1H, *Ar*); 5,86 (1H, m); 3,86 (2H, s); 2,26 (3H, s)
RMN ¹³C δ: 154,0; 153,1; 150,9; 130,6; 129,8; 115,3; 106,6; 105,9; 33,6; 13,5
Spectrométrie de masse : (2M+H)/z = 377 Th

### Exemple 2 - Sylvanylation de l'alcool vanillique

Le protocole opératoire A est appliqué à la sylvanylation de l'alcool vanillique, de formule générale :

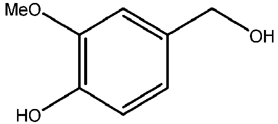

On obtient le dérivé sylvanylé de formule générale : 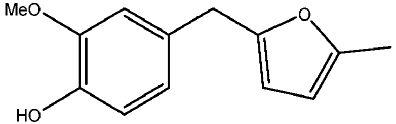 dans lequel le groupement hydroxyle porté par le carbone benzylique a été substitué par le sylvane.

Ce dérivé se présente sous forme d'une huile brune.

Le rendement de la réaction est de 94 %.Après purification par chromatographie préparative, 1,98 g de composé sont obtenus à partir de 2 g d'alcool vanillique initiaux.
RMN ¹H δ : 6,82 (1H, *Ar);* 6,72 (2H, *Ar);* 5,83 (2H, bs); 3,85 (3H, s); 3,82 (2H, s); 2,23 (3H, s)
RMN ¹³C δ : 153,1; 150,9; 146,6; 144,2; 130,3; 121,4; 114,4; 111,4; 106,6; 106,0; 55,9; 34,2; 13,4
Spectrométrie de masse: (M+H)/z = 219 Th (fragment : 137 Th) ; (2M+H)/z = 437 Th

### Exemple 3 - Sylvanylation de l'alcool syringique

Le protocole opératoire A est appliqué à la sylvanylation de l'alcool syringique.

On obtient le dérivé sylvanylé de formule générale : 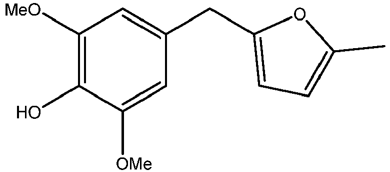 dans lequel le groupement hydroxyle porté par le carbone benzylique a été substitué par le sylvane.

Ce dérivé se présente sous forme d'une huile orange.

Le rendement de la réaction est de 93 %. Après purification par chromatographie préparative, 1,28 g de composé sont obtenus à partir de 1,80 g d'alcool initiaux.
RMN ¹H δ : 6,48 (2H, *Ar);* 5,87 (2H, m); 3,87 (6H, s); 3,84 (2H, s); 2,26 (3H, s)
RMN ¹³C δ : 152,9; 151,0; 146,9; 133,2; 129,4; 106,8; 106,0; 105,4; 56,2; 34,6; 13,5
Spectrométrie de masse : (M+H)/z = 249 Th ; (M+Na)/z = 271 Th ; (2M+H)/z = 497 Th ; (2M+Na)/z = 519

### Exemple 4 - Sylvanylation de l'alcool anisique

Le protocole opératoire B est appliqué à la sylvanylation de l'alcool anisique.

On obtient le dérivé sylvanylé de formule générale : 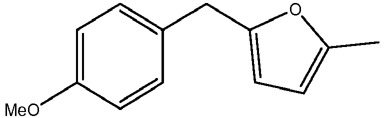 dans lequel le groupement hydroxyle porté par le carbone benzylique a été substitué par le sylvane.

Ce dérivé se présente sous forme d'une huile jaune sombre.

Le rendement de la réaction est de 99 %. Après purification par chromatographie préparative, 1,94 g de composé sont obtenus à partir de 2,07 g d'alcool initiaux.
RMN ¹H δ : 7.17 (2H, *Ar*); 6,86 (2H, *Ar*); 5,85 (2H, m); 3,87 (2H, s); 3,80 (3H, s); 2,26 (3H, s)
RMN ¹³C δ: 158,2 153,2; 150,9; 130,5; 129,6; 113,8; 106,6; 105,9; 55,2; 34,7; 13,5
Spectrométrie de masse : (2M+H)/z = 405 Th

### Exemple 5 - Sylvanylation de l'alcool vératrique

Le protocole opératoire B est appliqué à la sylvanylation de l'alcool vératrique, de formule générale :

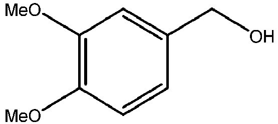

On obtient le dérivé sylvanylé de formule générale : 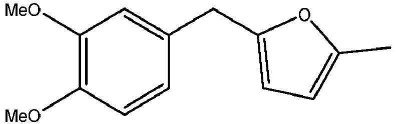 dans lequel le groupement hydroxyle porté par le carbone benzylique a été substitué par le sylvane.

Ce dérivé se présente sous forme d'une huile jaune.

Le rendement de la réaction est de 97 %. Après purification par chromatographie préparative, 2,21 g de composé sont obtenus à partir de 2,53 g d'alcool vératrique initiaux.
RMN ¹H δ : 6,83 (1H, *Ar*); 6,81 (2H, *Ar*); 5,88 (2H, bs); 3,88 (6H, s); 3,88 (3H, s); 2,28 (3H, s)
RMN ¹³C δ: 153,0; 150,9; 148,8; 147,6; 131,0; 120,6; 112,0; 111,2; 106,7; 105,9; 55,9; 55,8; 34,1; 13,5
Spectrométrie de masse: (M+H)/z = 233 Th (fragment : 151 Th); (2M+Na)/z = 487 Th

### Exemple 6 - Sylvanylation de l'alcool 3,4,5-triméthoxybenzylique

Le protocole opératoire B est appliqué à la sylvanylation de l'alcool 3,4,5-triméthoxybenzylique.

On obtient le dérivé sylvanylé de formule générale : 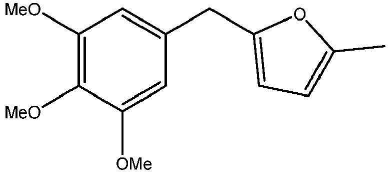 dans lequel le groupement hydroxyle porté par le carbone benzylique a été substitué par le sylvane.

Ce dérivé se présente sous forme d'une huile jaune sombre.

Le rendement de la réaction est de 92 %. Après purification par chromatographie préparative, 1,76 g de composé sont obtenus à partir de 2,00 g d'alcool initiaux.
RMN ¹H δ : 6,47 (2H, *Ar*); 5,89 (2H, m); 3,86 (2H, s); 3,84 (9H, s); 3,84 (3H, s); 2,26 (3H, s)
RMN ¹³C δ : 153,1; 152,4; 151,0 ; 136,5; 134,0; 106,9; 106,0; 105,7; 60,7; 56.0; 34,7; 13,4
Spectrométrie de masse : (M+H)/z = 263 Th ; (2M+Na)/z = 547 Th

### Exemple 7 - Condensation du N-méthylpyrrole avec l'alcool vanillique

Le protocole opératoire A est appliqué à la condensation du N-méthylpyrrole avec l'alcool vanillique.

On obtient le dérivé de formule générale : 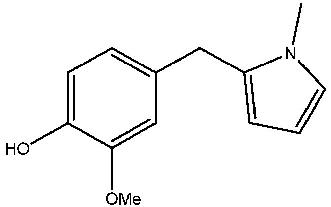 dans lequel le groupement hydroxyle porté par le carbone benzylique a été substitué par le N-méthylpyrrole.

Ce dérivé se présente sous forme d'une huile rouge.

Le rendement de la réaction est de 87 %. Après purification par chromatographie préparative, 0,874 g de composé sont obtenus à partir de 1,00 g d'alcool initiaux.
RMN ¹H δ : 6,78 (4H, *Ar*); 6,12 (1H, m); 5,94 (1H, d, J=3,3Hz); 3,92 (2H, s); 3,87 (3H, s); 3,48 (3H, s)
RMN ¹³C δ : 146,5; 143,9; 131,7 ; 131,2; 121,7; 121,1; 114,2; 111,0; 107,7; 106,5; 55,8; 35,9; 32,2
Spectrométrie de masse: (M+H)/z = 218 Th (fragment : 137 Th) ; (M+Na)/z = 250 Th

### Exemple 8 - Condensation du N-méthylpyrrole avec l'alcool vératrique

Le protocole opératoire B est appliqué à la condensation du N-méthylpyrrole avec l'alcool vératrique.

On obtient le dérivé de formule générale : 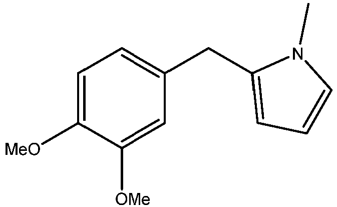 dans lequel le groupement hydroxyle porté par le carbone benzylique a été substitué par le N-méthylpyrrole.

Ce dérivé se présente sous forme d'une huile jaune.

Le rendement de la réaction est de 94 %. Après purification par chromatographie préparative, 0,786 g de composé sont obtenus à partir de 1,00 g d'alcool initiaux.
RMN ¹H δ : 6,76 (4H, *Ar*); 6,08 (1 H, d, *J*=3,3Hz); 5,90 (1 H, d, *J*=3,3Hz); 3,90 (2H, s); 3,87 (6H, s); 3,46 (3H, s)
RMN ¹³C δ: 150,0; 147,5; 132,0; 131,6; 121,7; 120,4; 111,8; 111,3; 107,7; 106,5; 55,1; 55,8; 36,0; 32,4
Spectrométrie de masse: (M+H)/z = 232 Th (fragment : 151 Th) ; (2M+Na)/z = 485 Th

### Exemple 9 - Condensation du 2-éthylthiophène avec l'alcool vératrique

Le protocole opératoire B est appliqué à la condensation du 2-éthylthiophène avec l'alcool vératrique.

On obtient le dérivé de formule générale : 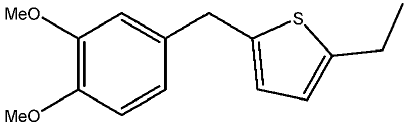 dans lequel le groupement hydroxyle porté par le carbone benzylique a été substitué par le 2-éthylthiophène.

Ce dérivé se présente sous forme d'une huile orange-brun.

Le rendement de la réaction est de 95 %. Après purification par chromatographie préparative, 0,71 g de composé obtenus à partir de 1,00 g d'alcool initiaux.
RMN ¹H δ : 6,72 (5H, *Ar*); 4,05 (2H, s); 3,88 (6H, s); 2,80 (2H, q, *J*=3,4Hz); 1,29 (3H, t, *J*=7,5Hz)
RMN ¹³C δ : 148,9; 147,6; 146,0; 141,7; 133,1; 124,3; 122,7; 120,5; 111,2; 55,8; 35,9; 23,4; 15,8
Spectrométrie de masse : (M+H)/z = 263 Th (fragment 151 Th) ; (M+Na)/z = 285 Th ; (2M+H)/z = 547 Th

### Exemple 10 - sylvanylation du 1-(3,4-diméthoxyphényl)-2-(2-méthoxyphénoxy)propane-1,3-diol

Le protocole opératoire B est appliqué à la condensation du sylvane avec le 1-(3,4-diméthoxyphényl)-2-(2-méthoxyphénoxy)propane-1,3-diol.

On obtient le dérivé de formule générale : 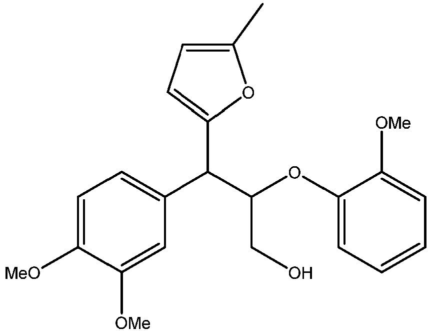 dans lequel le groupement hydroxyle porté par le carbone benzylique a été substitué par le sylvane.

Ce dérivé se présente sous forme d'une huile visqueuse légèrement jaunâtre.

Le rendement de la réaction est de 99 %. Après purification par chromatographie préparative, 184 mg de composé sont obtenus à partir de 200 mg d'alcool initiaux.
RMN ¹H δ : 6,92 (7H, *Ar*); 6,09 (1H, *Ar*); 5,88 (1H, m); 4,61 (1H, m); 4,42 (1H, m) 3,85 (9H, m); 3,53 (2H, m); 2,26 (3H, m)
RMN ¹³C δ: 153,1; 150,7; 149,0; 148,1; 147,6; 131,9; 123,7; 121,5; 120,7; 112,1; 111,9; 111,4; 107,6; 106,3; 86,1; 61,4; 55,9; 46,6 ; 13,6
Spectrométrie de masse : (M+H)/z = 399 Th ; (M+NH₄)/z = 416 Th ; (2M+H)/z = 797 Th ; (2M+Na)/z = 819 Th

### Exemple 11 - condensation du N-méthylpyrrole avec le 1-(3,4-diméthoxyphényl)-2-(2-méthoxyphénoxy)propane-1,3-diol

Le protocole opératoire B est appliqué à la condensation du N-méthylpyrrole avec le 1-(3,4-diméthoxyphényl)-2-(2-méthoxyphénoxy)propane-1,3-diol.

On obtient le dérivé de formule générale : 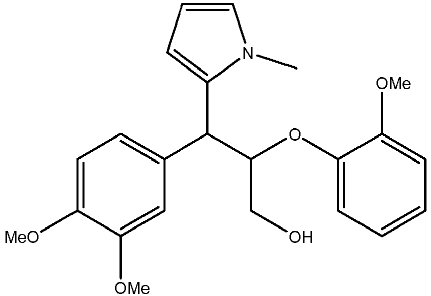 dans lequel le groupement hydroxyle porté par le carbone benzylique a été substitué par le N-méthylpyrrole.

Ce dérivé se présente sous forme d'une huile visqueuse légèrement jaunâtre.

Le rendement de la réaction est de 97 %. Après purification par chromatographie préparative, 122 mg de composé sont obtenus à partir de 200 mg d'alcool initiaux.
RMN ¹H δ : 6,80 (8H, *Ar*); 6,32 (1H, m) 6,08 (1H, m); 4,44 (2H, m); 3,84 (9H, m); 3,71 (2H, m); 3,50 (3H, m)
RMN ¹³C δ: 151,3; 148,8; 148,0; 147,7; 133,5; 132,2; 123,5; 121,6; 121,5; 121,2; 120,3; 112,5; 112,0; 111,3; 106,8; 106,2; 87,5; 62,5; 55,9; 44,1; 33,9
Spectrométrie de masse : (M+H)/z = 398 Th ; (M+Na)/z = 420 Th

### Exemple 12 - condensation du 2-éthylthiophène avec le 1-(3,4-diméthoxyphényl)-2-(2-méthoxyphénoxy)propane-1,3-diol

Le protocole opératoire B est appliqué, en 180 min, à la condensation du 2-éthylthiophène avec le 1-(3,4-diméthoxyphényl)-2-(2-méthoxyphénoxy)propane-1,3-diol.

On obtient le dérivé de formule générale : 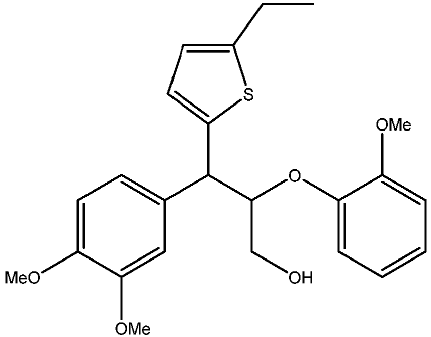 dans lequel le groupement hydroxyle porté par le carbone benzylique a été substitué par le 2-éthylthiophène.

Ce dérivé se présente sous forme d'une huile visqueuse légèrement jaunâtre.

Le rendement de la réaction est de 59 %. Après purification par chromatographie préparative, 278 mg de composé sont obtenus à partir de 400 mg d'alcool initiaux.
RMN ¹H δ : 6,84 (9H, *Ar*); 4,57 (2H, m); 3,86 (9H, m); 3,57 (2H, m); 2,78 (2H, q, J=7,9Hz); 1,27 (3H, m)
RMN ¹³C δ: 151,6; 149,0; 147,5; 146,1; 134,3; 133,4; 125,4; 123,8; 122,6; 121,6; 120,7; 112,2; 111,4; 87,4; 61,5; 55,9; 48,3; 23,4; 15,9
Spectrométrie de masse : (M+NH₄)/z = 446 Th ; (2M+H)/z = 857 Th ; (2M+NH₄)/z = 874 Th

### Exemple 13 - condensation du N-méthylpyrrole avec le 1-(4-hydroxy-3-méthoxyphényl)-2-(2-méthoxyphénoxy)propane-1,3-diol

Le protocole opératoire B est appliqué à la condensation du N-méthylpyrrole avec le 1-(4-hydroxy-3-méthoxyphényl)-2-(2-méthoxyphénoxy)propane-1,3-diol.

On obtient le dérivé de formule générale : 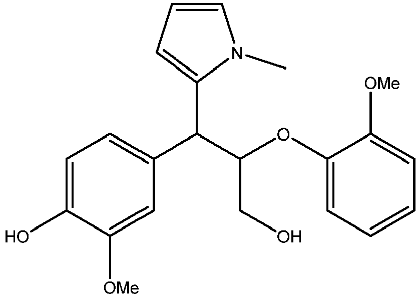 dans lequel le groupement hydroxyle porté par le carbone benzylique a été substitué par le N-méthylpyrrole.

Ce dérivé se présente sous forme d'une huile visqueuse légèrement jaunâtre.

Le rendement de la réaction est de 98 %. Après purification par chromatographie préparative, 306 mg de composé sont obtenus à partir de 400 mg d'alcool initiaux.
RMN ¹H δ : 6,78 (8H, *Ar);* 6,08 (2H, m); 4,49 (2H, m); 3,84 (6H, m); 3,65 (2H, m); 3,43 (3H, m)
RMN ¹³C δ: 151,3; 148,0; 146,4 ; 144,5; 132,8; 131,6; 123,4; 121,8; 121,6; 121,5; 120,2 ; 114,4; 114,1; 111,9; 106,7; 106,5; 87,4; 62,5; 55,9; 44,1; 33,9
Spectrométrie de masse : (M+H)/z = 384 Th (fragment 303 Th); (M+Na)/z = 406 Th ; (2M+NH₄)/z = 784 Th ; (2M+Na)/z = 789 Th

### Exemple 14 - condensation du sylvane avec le 1-(4-hydroxy-3-méthoxyphényl)-2-(2-méthoxyphénoxy)propane-1,3-diol

Le protocole opératoire B est appliqué à la condensation du sylvane avec le 1-(4-hydroxy-3-méthoxyphényl)-2-(2-méthoxyphénoxy)propane-1,3-diol.

On obtient le dérivé de formule générale : 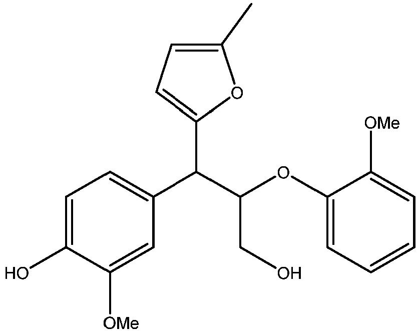 dans lequel le groupement hydroxyle porté par le carbone benzylique a été substitué par le sylvane.

Ce dérivé se présente sous forme d'une huile visqueuse légèrement jaunâtre.

Le rendement de la réaction est de 99 %. Après purification par chromatographie préparative, 480 mg de composé sont obtenus à partir de 400 mg d'alcool initiaux.
RMN ¹H δ : 6,93 (7H, *Ar);* 6,08 (1H, *Ar);* 5,88 (1H, m); 4,60 (1H, m); 4,42 (1 H, m) 3,85 (6H, m); 3,54 (2H, m); 2,25 (3H, m)
RMN ¹³C δ: 153,2; 150,7; 147,6; 146,5; 144,7; 131,2; 123,7; 121,5; 120,7; 114,5; 112,1; 111,3; 107,6; 106,2; 86,1; 61,4; 55,9; 46,6; 13,6
Spectrométrie de masse : (M+H)/z = 385 Th; (M+NH₄)/z = 402 Th ; (2M+H)/z = 769 Th ; (2M+NH₄)/z = 784 Th

### Exemple 15 - Mise en œuvre simultanée de l'extraction de lignine à partir de sciure de bois de Pin Douglas par un procédé de type Organosolv et d'un procédé de préparation d'un dérivé de lignine selon l'invention

La sciure de bois de tailles de particules 1 mm est placée dans un réacteur batch avec une solution EtOH/sylvane/Eau (70/20/10 v/v%) dans les conditions du Protocole H. Le réacteur est placé sous atmosphère d'azote. La solution est agitée et portée à 195°C, donnant une pression de travail de 22 bars. Le chauffage est maintenu pendant 1 h. L'extrait de lignine conjuguée au métallole est récupéré après filtration, précipitation et centrifugation. Le précipité est séché à l'étuve à 40°C. L'extrait de lignine sec est analysé en couplage Pyrolyse-CPG-SM, selon le Protocole I.

### Exemple 16 - Caractérisation des dérivés de lignine selon l'invention par couplage Py-CPG-SM (Protocole I)

Les signaux caractéristiques de la fonctionnalisation de la lignine par les métalloles (m/z, ces signaux étant ci-après désignés par le terme « marqueurs ») sont recherchés sur la base des résultats obtenus en Py-CPG-SM, selon le Protocole I (mode d'ionisation par impact électronique), pour les dérivés de dimères modèles décrits dans l'Exemple 14 pour le sylvane et dans l'Exemple 12 pour le 2-éthylthiophène.

Les spectres obtenus pour le dérivé sylvanylé de l'Exemple 14 sont montrés sur la figure 1. On y identifie les marqueurs m/z = 260, m/z = 230 et m/z = 218, spécifiques de la fonctionnalisation du modèle de lignine par le sylvane.

Ces marqueurs correspondent aux produits de pyrolyse suivants :

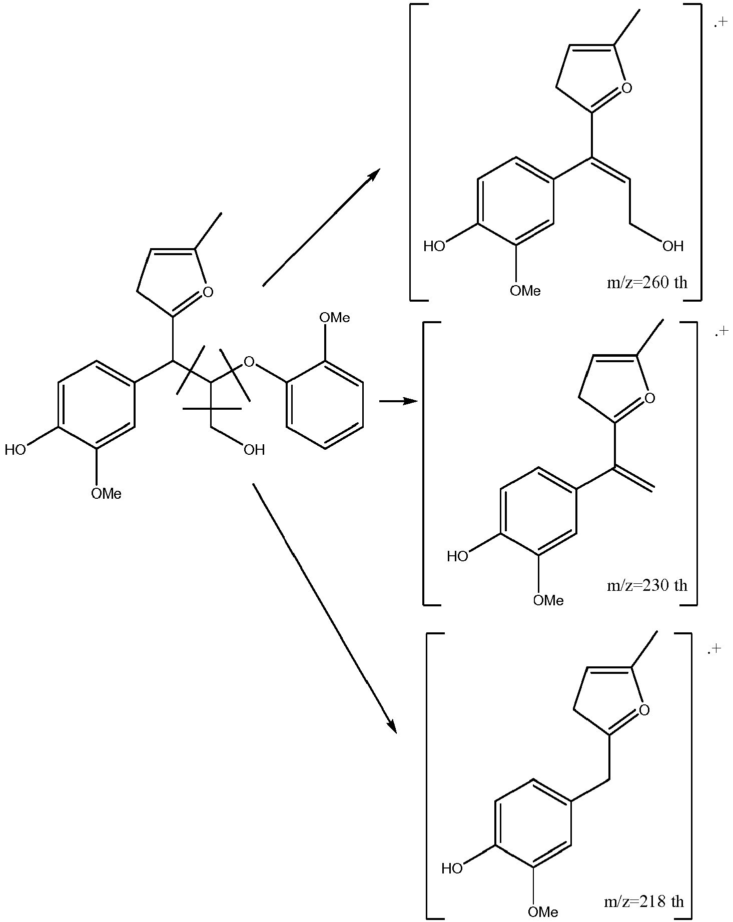

On observe également un signal m/z = 124 correspond au fragment guaiacol (non montré sur les figures).

Les spectres obtenus pour le dérivé de l'Exemple 12 (fonctionnalisation par le 2-éthylthiophène) sont montrés sur la figure 2. On y identifie les marqueurs m/z = 274 et m/z = 276, spécifiques de la fonctionnalisation de ce modèle de lignine par ce métallole.

Ces marqueurs correspondent aux produits de pyrolyse suivants :

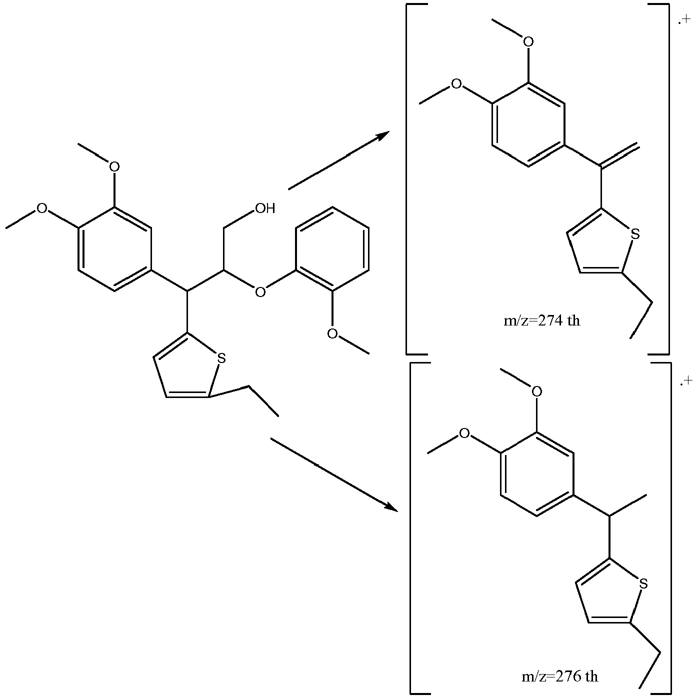

Différents extraits de lignines, soit commerciaux, soit préparés à partir de sciure de pin Douglas ou de tiges de maïs broyées selon les Protocoles E ou F, sont stabilisés par condensation avec un métallole (sylvane ou 2-éthylthiophène) conformément à la présente invention selon le Protocole A'. Les produits obtenus sont neutralisés par ajout d'une quantité équimolaire de base et concentrés à sec sous vide.

Par ailleurs, la condensation avec le sylvane est directement réalisée sur des échantillons de biomasse (sciure de bois et farine de bois) selon le Protocole A' ou selon le Protocole H.

Chacun des produits obtenus est analysé en couplage Py-CPG-SM pour vérifier la présence des signaux caractéristiques de la fonctionnalisation par le métallole (marqueurs). Les marqueurs recherchés sont les marqueurs m/z = 260, 230 et 218 pour les dérivés sylvanylés, et m/z = 260, 262 pour les dérivés obtenus avec le 2-éthylthiophène.

En ce qui concerne les dérivés obtenus avec le 2-éthylthiophène, la différence de m/z 14 avec les signaux caractéristiques obtenus comme décrit ci-dessus avec le dimère modèle provient de l'absence du second groupement -CH₃ sur le noyau phénolique dans la lignine par rapport à ce dimère modèle. Les produits de pyrolyse obtenus pour le dérivé de lignine, et les marqueurs associés, sont en effet les suivants :

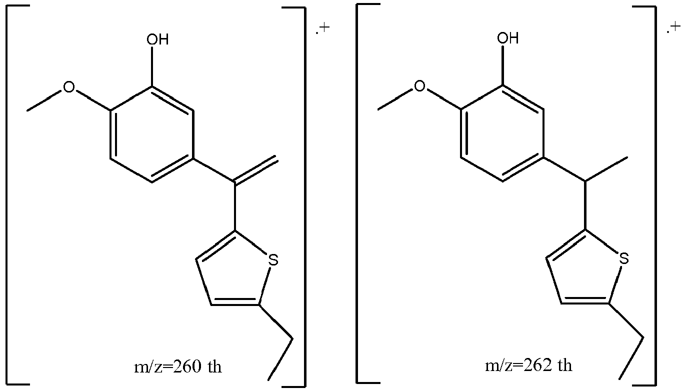

Il est au préalable vérifié, par analyse Py-CPG-SM, que l'ensemble de ces signaux n'apparaissent pas pour les extraits de lignine de bois et de lignine de maïs non fonctionnalisées par un métallole.

La nature des substrats sur lesquels sont mis en œuvre des procédés conformes à l'invention, les protocoles utilisés et les résultats de l'analyse en Py-CPG-SM sont rassemblés dans le Tableau 1 ci-après.

**Tableau 1 - Résultats d'analyse par couplage Py- CPG-SM pour des dérivés de lignine obtenus conformément à l'invention**

| Lignine | Procédé d'obtention | Procédé de fonctionnalisation | Marqueurs m/z détectés en Py-GC-MS |
|---|---|---|---|
| Extrait de lignine de bois | Protocole E (alcalin) | Protocole A' - sylvane | 260 - 230 - 218 |
| Extrait de lignine de maïs | Protocole E (alcalin) | Protocole A' - sylvane | 260 - 230 - 218 |
| Lignine Kraft | Extrait commercial | Protocole A' - sylvane | 260 - 230 - 218 |
| Extrait de lignine de bois | Protocole F (Formacell) | Protocole A' - sylvane | 260 - 230 - 218 |
| Sciure de bois broyée (0,25 mm) | Protocole C | Protocole A' - sylvane | 260 - 230 - 218 |
| Farine de bois | Protocole D | Protocole A' - sylvane | 260 - 230 - 218 |
| Sciure de bois broyée (1 mm) | Protocole C | Protocole H (réacteur unique) - azote - sylvane | 260 - 230 - 218 |
| Sciure de bois broyée (1 mm) | Protocole C | Protocole H (réacteur unique) - air - sylvane | 260 - 230 - 218 |
| Extrait de lignine de bois | Protocole E (alcalin) | Protocole A' - 2-éthylthiophène | 260 - 262 |
| Extrait de lignine de maïs | Protocole E (alcalin) | Protocole A' - 2-éthylthiophène | 260 - 262 |
| Lignine Kraft | Extrait commercial | Protocole A' - 2-éthylthiophène | 260 - 262 |

Ces résultats attestent de la réussite de la fonctionnalisation de la lignine par le métallole, réalisée conformément à la présente invention, quelle que soit la forme de la lignine de départ, y compris lorsque la fonctionnalisation est réalisée directement sur la biomasse, et même en réacteur unique avec un procédé d'extraction de lignine classique, et quel que soit le métallole mis en œuvre.

### Exemple 17 - Dépolymérisation acido-catalysée du dérivé sylvanylé obtenu à l'Exemple 14 selon le protocole J

200 mg du produit sylvanylé décrit dans l'Exemple 14 sont dissous dans 20 mL de méthanol contenant 0,1 M d'acide méthanesulfonique. La solution est portée à 65°C sous agitation pendant 3 h. 25 mL d'eau sont ajoutés au mélange réactionnel et le méthanol est évaporé sous vide. Le produit brut obtenu à l'issue du procédé est purifié par chromatographie sur gel de silice par un gradient Méthanol / dichlorométhane 0 à 2 %. On obtient le dérivé de formule générale :

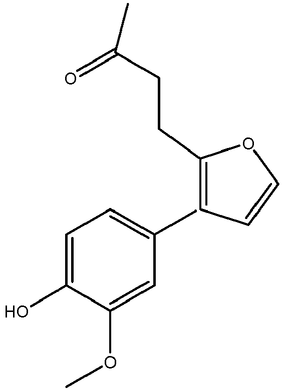

RMN ¹H δ : 7,34 (1H, *Ar);* 6,92 (3H, *Ar);* 6,46 (1H, *Ar);* 5,69 (H, bs); 3,84 (3H, s); 3,08 (2H, t, *J*=7,48Hz); 2,85 (2H, t, *J*=7,48Hz); 2,17 (3H, s)
RMN ¹³C δ : 207,7; 149,1; 146,6; 144,5; 140,6; 126,0; 121,3; 120,9; 114,6; 111,6; 110,6; 56,0; 41,5; 30,0; 21,1
Spectrométrie de masse : (M+H)/z = 261 Th ; (M+Na)/z = 283 Th ; (2M+Na)/z = 543 Th

Ce dérivé peut être converti par chauffage à reflux du méthanol en conditions oxydantes en sa forme insaturée de formule générale suivante :

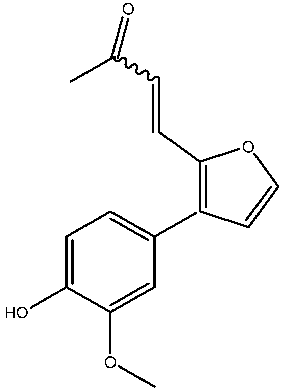

Spectrométrie de masse : (M+H)/z = 259 Th ; (M+Na)/z = 281 Th ; (2M+Na)/z = 539 Th
λmax du spectre uv-visible : 360 nm

### Exemple 18 - Dépolymérisation baso-catalysée du dérivé sylvanylé obtenu à l'Exemple 10 selon le protocole K

200 mg du produit sylvanylé décrit dans l'Exemple 10 sont placés dans un tube SLV fileté et 20 mL de méthanol contenant 1 M d'hydroxyde de sodium sont ajoutés. La solution est portée à 100°C sous agitation pendant 7 h. 25 mL d'eau sont ajoutés au mélange réactionnel et le méthanol est évaporé sous vide. Le produit brut obtenu à l'issue du procédé est purifié par chromatographie sur gel de silice par un gradient Méthanol / dichlorométhane 0 à 2 %. On obtient le dérivé de formule générale :

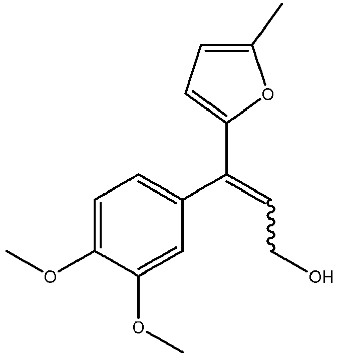

RMN ¹H δ : 6,90 (3H, *Ar);* 6,19 (1H, *Ar);* 6,15 (1H, *Ar);* 5,75 (1H, t, *J*=5,96Hz); 4,35 (2H, *J*=5,96Hz) ; 3,72 (6H, bs); 2,26 (3H, s)
RMN ¹³C δ : 153,8; 151,6; 150,2; 149,5; 148,1; 132,7; 130,5; 120,0; 112,4; 112,1; 111,3; 107,1; 55,8; 55,2 ; 13,2
Spectrométrie de masse : (M-H₂O)/z = 257 Th ; (M+Na)/z = 297 Th ; (2M+Na)/z = 571 Th

### Exemple 19 - Dépolymérisation thermo-catalysée du dérivé sylvanylé obtenu à l'Exemple 16

Une petite quantité d'extrait alcalin de lignine de bois sylvanylée obtenue à l'Exemple 16 est pyrolysée à 500°C dans les conditions du Protocole L. L'huile condensée et récupérée à l'issue de la pyrolyse est analysée en couplage CPG-SM.

On détecte bien la présence des marqueurs caractéristiques des produits de pyrolyse du dérivé de lignine fonctionnalisée par le sylvane conformément à l'invention, c'est-à-dire les pics à m/z 260, m/z 230 et m/z 218.

## Revendications

1. Dérivé de lignine comprenant une unité de formule générale (I) : 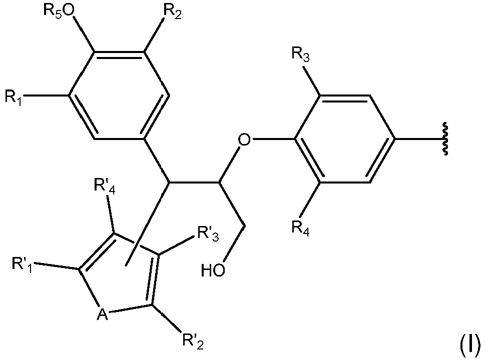 dans laquelle :
R₁, R₂, R₃ et R₄, identiques ou différents, représentent chacun un atome d'hydrogène, un groupement méthoxy -OMe, un groupement hydroxyle, le cas échéant protégé par un groupement protecteur d'une fonction hydroxyle, ou un motif 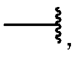
R₅ représente un atome d'hydrogène, un groupement protecteur d'une fonction hydroxyle ou un motif 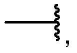
A représente un atome d'oxygène, un atome de soufre ou un groupement -NR', où R' représente un atome d'hydrogène ou un substituant ne comportant pas de groupement électro-attracteur par effet mésomère conjugué au noyau aromatique,
R'₁, R'₂, R'₃ et R'₄, identiques ou différents, représentent chacun un atome d'hydrogène ou un substituant ne comportant pas de groupement électro-attracteur par effet mésomère conjugué au noyau aromatique,
un substituant parmi R'₁, R'₂, R'₃ et R'₄ représentant la liaison covalente avec le carbone benzylique,
ou un de ses sels.

2. Dérivé de lignine selon la revendication 1, dans lequel R'₁ et R'₂, identiques ou différents, représentent chacun, à l'exception du substituant formant la liaison covalente avec le carbone benzylique :
- un atome d'hydrogène,
- ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes.

3. Dérivé de lignine selon l'une quelconque des revendications 1 à 2, dans lequel R'₃ et R'₄, identiques ou différents, représentent chacun, à l'exception du substituant formant la liaison covalente avec le carbone benzylique :
- un atome d'hydrogène,
- un groupement comportant un radical électro-donneur lié directement ou par conjugaison au noyau aromatique,
- ou un radical carboné linéaire, ramifié et/ou cyclique, pouvant comporter un seul cycle ou plusieurs cycles condensés, saturé et/ou insaturé, le cas échéant aromatique, éventuellement substitué, comportant éventuellement un ou plusieurs hétéroatomes et/ou un ou plusieurs groupements comprenant un ou plusieurs hétéroatomes.

4. Dérivé de lignine selon l'une quelconque des revendications 1 à 3, dans lequel au moins un substituant parmi R'₁, R'₂, R'₃ et R'₄ représente un atome d'hydrogène.

5. Dérivé de lignine selon l'une quelconque des revendications 1 à 4, dans lequel R'₁ représente la liaison covalente avec le carbone benzylique.

6. Dérivé de lignine selon l'une quelconque des revendications 1 à 5, dans lequel R'₃ et R'₄ représentent chacun un atome d'hydrogène.

7. Dérivé de lignine selon l'une quelconque des revendications 1 à 6, dans lequel R'₂ représente un atome d'hydrogène ou un groupement alkyle.

8. Dérivé de lignine selon l'une quelconque des revendications 1 à 7, dans lequel A représente un atome d'oxygène, R'₁ représente la liaison covalente avec le carbone benzylique, R'₂ représente un groupement alkyle en C1-C7 et R'₃ et R'₄ représentent chacun un atome d'hydrogène.

9. Dérivé de lignine selon l'une quelconque des revendications 1 à 7, dans lequel A représente un groupement -NR', où R' représente un atome d'hydrogène ou un groupement alkyle en C1-C4, R'₁ représente la liaison covalente avec le carbone benzylique, et R'₂, R'₃ et R'₄ représentent chacun un atome d'hydrogène.

10. Procédé de préparation d'un dérivé de lignine, **caractérisé en ce qu'**on fait réagir de la lignine avec un composé de formule générale (II) : 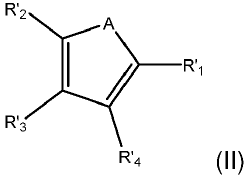 dans laquelle
A représente un atome d'oxygène, un atome de soufre ou un groupement -NR', où R' représente un atome d'hydrogène ou un substituant ne comportant pas de groupement électro-attracteur par effet mésomère conjugué au noyau aromatique,
R'₁, R'₂, R'₃ et R'₄, identiques ou différents, représentent chacun un atome d'hydrogène ou un substituant ne comportant pas de groupement électro-attracteur par effet mésomère conjugué au noyau aromatique, au moins un substituant parmi R'₁, R'₂, R'₃ et R'₄ représentant un atome d'hydrogène,
ou un de ses sels,
de sorte à réaliser la substitution d'un groupement hydroxyle de la lignine, en particulier un groupement porté par un carbone benzylique, par ledit composé de formule générale (II).

11. Procédé selon la revendication 10, selon lequel le composé de formule générale (II) est introduit dans le milieu réactionnel dans une quantité telle que le nombre d'équivalents molaires du composé de formule générale (II) par rapport au nombre de carbones benzyliques de la lignine est compris entre 2 et 15.

12. Procédé selon l'une quelconque des revendications 10 à 11, selon lequel la réaction entre la lignine et le composé de formule générale (II) est réalisée en milieu acide.

13. Procédé selon l'une quelconque des revendications 10 à 12, selon lequel la réaction entre la lignine et le composé de formule générale (II) est réalisée dans un solvant organique, seul ou en mélange avec l'eau.

14. Procédé selon l'une quelconque des revendications 10 à 13, mis en œuvre sur de la biomasse lignocellulosique.

15. Procédé selon l'une quelconque des revendications 10 à 13, mis en œuvre sur de la lignine extraite de biomasse lignocellulosique.

16. Procédé selon l'une quelconque des revendications 10 à 13, mis en œuvre simultanément à un procédé d'extraction de lignine à partir de biomasse lignocellulosique.

17. Procédé de dépolymérisation de lignine, **caractérisé en ce qu'**il comprend les deux étapes successives de :
- mise en œuvre d'un procédé de préparation d'un dérivé de lignine selon l'une quelconque des revendications 10 à 16,
- et craquage du dérivé de lignine ainsi obtenu.

18. Procédé selon la revendication 17, selon lequel lesdites deux étapes sont réalisées successivement dans le même réacteur.

19. Produit de dépolymérisation susceptible d'être obtenu par un procédé de dépolymérisation de lignine selon l'une quelconque des revendications 17 à 18.

## Patentansprüche

1. Ligninderivat, umfassend eine Einheit der allgemeinen Formel (I): 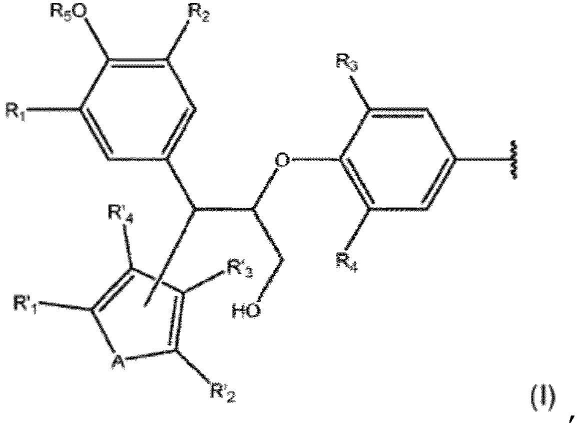 wobei:
R₁, R₂, R₃ und R₄, die gleich oder verschieden sind, jeweils für ein Wasserstoffatom, eine Methoxygruppe -OMe, eine Hydroxylgruppe, gegebenenfalls durch eine Schutzgruppe für
eine Hydroxylgruppe geschützt, oder ein Motiv 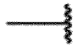 steht, R₅ für ein Wasserstoffatom, eine Schutzgruppe für eine
Hydroxylfunktion oder ein Motiv 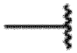 steht, A für ein Sauerstoffatom, ein Schwefelatom oder eine -NR'-Gruppe steht, wo R' für ein Wasserstoffatom oder einen Substituenten steht, der keine durch den mesomeren Effekt elektronenziehende Gruppe umfasst, die an den aromatischen Kern konjugiert ist,
R'₁, R'₂, R'₃ und R'₄, die gleich oder verschieden sind, jeweils für ein Wasserstoffatom oder einen Substituenten stehen, der keine durch den mesomeren Effekt elektronenziehende Gruppe umfasst, die an den aromatischen Kern konjugiert ist,
wobei ein Substituent von R'₁, R'₂, R'₃ und R'₄ für die kovalente Bindung mit dem Benzylkohlenstoff steht,
oder eines ihrer Salze.

2. Ligninderivat nach Anspruch 1, wobei R'₁ und R'₂, die gleich oder verschieden sind, mit Ausnahme des Substituenten, der die kovalente Bindung mit dem Benzylkohlenstoff bildet, jeweils für:
- ein Wasserstoffatom
- oder ein lineares, verzweigtes und/oder cyclisches, gesättigtes und/oder ungesättigtes, gegebenenfalls aromatisches, eventuell substituiertes Kohlenstoffradikal, das einen einzigen Cyclus oder mehrere kondensierte Cyclen umfassen kann, eventuell umfassend ein oder mehrere Heteroatome und/oder eine oder mehrere Gruppen, umfassend ein oder mehrere Heteroatome, stehen.

3. Ligninderivat nach einem der Ansprüche 1 bis 2, wobei R'₃ und R'₄, die gleich oder verschieden sind, mit Ausnahme des Substituenten, der die kovalente Bindung mit dem Benzylkohlenstoff bildet, jeweils für:
- ein Wasserstoffatom,
- eine Gruppe, umfassend ein elektronenspendendes Radikal, das direkt oder durch Konjugation mit dem aromatischen Kern verbunden ist,
- oder ein lineares, verzweigtes und/oder cyclisches, gesättigtes und/oder ungesättigtes, gegebenenfalls aromatisches, eventuell substituiertes Kohlenstoffradikal, das einen einzigen Cyclus oder mehrere kondensierte Cyclen umfassen kann, eventuell umfassend ein oder mehrere Heteroatome und/oder eine oder mehrere Gruppen, umfassend ein oder mehrere Heteroatome, stehen.

4. Ligninderivat nach einem der Ansprüche 1 bis 3, wobei mindestens ein Substituent von R'₁, R'₂, R'₃ und R'₄ für ein Wasserstoffatom steht.

5. Ligninderivat nach einem der Ansprüche 1 bis 4, wobei R'₁ für die kovalente Bindung mit dem Benzylkohlenstoff steht.

6. Ligninderivat nach einem der Ansprüche 1 bis 5, wobei R'₃ und R'₄ jeweils für ein Wasserstoffatom stehen.

7. Ligninderivat nach einem der Ansprüche 1 bis 6, wobei R'₂ für ein Wasserstoffatom oder eine Alkylgruppe steht.

8. Ligninderivat nach einem der Ansprüche 1 bis 7, wobei A für ein Sauerstoffatom steht, R'₁ für die kovalente Bindung mit dem Benzylkohlenstoff steht, R'₂ für eine C1-C7-Alkylgruppe steht und R'₃ und R'₄ jeweils für ein Wasserstoffatom stehen.

9. Ligninderivat nach einem der Ansprüche 1 bis 7, wobei A für eine -NR'-Gruppe steht, wo R' für ein Wasserstoffatom oder eine C1-C4-Alkylgruppe steht, R'₁ für die kovalente Bindung mit dem Benzylkohlenstoff steht und R'₂, R'₃ und R'₄ jeweils für ein Wasserstoffatom stehen.

10. Verfahren zur Herstellung eines Ligninderivats, **dadurch gekennzeichnet, dass** Lignin mit einer Verbindung der allgemeinen Formel (II): 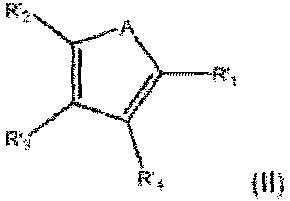 wobei
A für ein Sauerstoffatom, ein Schwefelatom oder eine -NR'-Gruppe steht, wo R' für ein Wasserstoffatom oder einen Substituenten steht, der keine durch den mesomeren Effekt elektronenziehende Gruppe umfasst, die an den aromatischen Kern konjugiert ist,
R'₁, R'₂, R'₃ und R'₄, die gleich oder verschieden sind, jeweils für ein Wasserstoffatom oder einen Substituenten stehen, der keine durch den mesomeren Effekt elektronenziehende Gruppe umfasst, die an den aromatischen Kern konjugiert ist, wobei mindestens ein Substituent von R'₁, R'₂, R'₃ und R'₄ für ein Wasserstoffatom steht,
oder einem ihrer Salze,
reagieren gelassen wird,
so dass die Substitution einer Hydroxylgruppe des Lignins, insbesondere einer Gruppe, die von einem Benzylkohlenstoff getragen wird, durch die Verbindung der allgemeinen Formel (II) durchgeführt wird.

11. Verfahren nach Anspruch 10, wobei die Verbindung der allgemeinen Formel (II) in das Reaktionsmedium in einer Menge eingebracht wird, so dass die Anzahl von Moläquivalenten der Verbindung der allgemeinen Formel (II) im Verhältnis zu der Anzahl von Benzylkohlenstoffen des Lignins zwischen 2 und 15 liegt.

12. Verfahren nach einem der Ansprüche 10 bis 11, wobei die Reaktion zwischen dem Lignin und der Verbindung der allgemeinen Formel (II) in einem sauren Medium durchgeführt wird.

13. Verfahren nach einem der Ansprüche 10 bis 12, wobei die Reaktion zwischen dem Lignin und der Verbindung der allgemeinen Formel (II) in einem organischen Lösungsmittel, für sich oder im Gemisch mit Wasser, durchgeführt wird.

14. Verfahren nach einem der Ansprüche 10 bis 13, an Lignocellulosebiomasse umgesetzt.

15. Verfahren nach einem der Ansprüche 10 bis 13, an aus Lignocellulosebiomasse extrahiertem Lignin umgesetzt.

16. Verfahren nach einem der Ansprüche 10 bis 13, gleichzeitig mit einem Verfahren zur Extraktion von Lignin aus Lignocellulosebiomasse umgesetzt.

17. Verfahren zur Entpolymerisation von Lignin, **dadurch gekennzeichnet, dass** es zwei aufeinanderfolgende Schritte umfasst:
- Umsetzen eines Verfahrens zur Herstellung eines Ligninderivats nach einem der Ansprüche 10 bis 16
- und Cracken des so erhaltenen Ligninderivats.

18. Verfahren nach Anspruch 17, wobei die zwei Schritte nacheinander im selben Reaktor durchgeführt werden.

19. Entpolymerisationsprodukt, das durch ein Verfahren zur Entpolymerisation von Lignin nach einem der Ansprüche 17 bis 18 erhalten werden kann.

## Claims

1. Lignin derivative comprising a unit having the general formula (I): 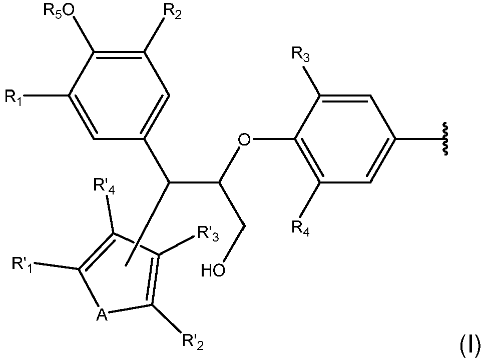 in which:
R₁, R₂, R₃ and R₄, which may identical or different, each represent a hydrogen atom, an -OMe methoxy group, a hydroxyl group, optionally protected by a hydroxyl-protecting group, or a 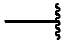 motif,
R₅ represents a hydrogen atom, a hydroxyl-protecting group or a 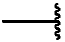 motif,
A represents an oxygen atom, a sulfur atom or an -NR' group, where R' represents a hydrogen atom or a substituent not including any mesomeric-effect electron-withdrawing group conjugated to the aromatic ring,
R'₁, R'₂, R'₃ and R'₄, which may be identical or different, each represent a hydrogen atom or a substituent not including any mesomeric-effect electron-withdrawing group conjugated to the aromatic ring,
one substituent among R'₁, R'₂, R'₃ and R'₄ representing the covalent bond with the benzylic carbon,
or one of the salts thereof.

2. Lignin derivative according to claim 1, wherein R'₁ and R'₂, identical or different, each represent, except for the substituent forming the covalent bond with the benzylic carbon:
- a hydrogen atom,
- or a linear, branched and/or cyclic, saturated and/or unsaturated, optionally aromatic, carbon radical, which may include a single cycle or a plurality of condensed cycles, optionally substituted, optionally including one or more heteroatoms and/or one or more groups comprising one or more heteroatoms.

3. Lignin derivative according to any one of claims 1 to 2, wherein R'₃ and R'₄, identical or different, each represent, except for the substituent forming the covalent bond with the benzylic carbon:
- a hydrogen atom,
- a group including an electron-donating radical bonded directly or by conjugation to the aromatic ring,
- or a linear, branched and/or cyclic, saturated and/or unsaturated, optionally aromatic, carbon radical, which may include a single cycle or a plurality of condensed cycles, optionally substituted, optionally including one or more heteroatoms and/or one or more groups comprising one or more heteroatoms.

4. Lignin derivative according to any one of claims 1 to 3, wherein at least one substituent among R'₁, R'₂, R'₃ and R'₄ represents a hydrogen atom.

5. Lignin derivative according to any one of claims 1 to 4, wherein R'₁ represents the covalent bond with the benzylic carbon.

6. Lignin derivative according to any one of claims 1 to 5, wherein R'₃ and R'₄ each represent a hydrogen atom.

7. Lignin derivative according to any one of claims 1 to 6, wherein R'₂ represents a hydrogen atom or an alkyl group.

8. Lignin derivative according to any one of claims 1 to 7, wherein A represents an oxygen atom, R'₁ represents the covalent bond with the benzylic carbon, R'₂ represents a C1-C7 alkyl group and R'₃ and R'₄ each represent a hydrogen atom.

9. Lignin derivative according to any one of claims 1 to 7, wherein A represents an -NR' group, wherein R' represents a hydrogen atom or a C1-C4 alkyl radical, R'₁ represents the covalent bond with the benzylic carbon, and R'₂, R'₃ and R'₄ each represent a hydrogen atom.

10. Method for preparing a lignin derivative, **characterised in that** lignin is reacted with a compound having the general formula (II): 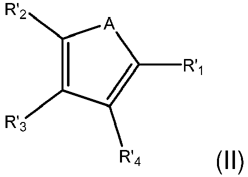 in which
A represents an oxygen atom, a sulfur atom or an -NR' group, wherein R' represents a hydrogen atom or a substituent not including any mesomeric-effect electron-withdrawing group conjugated to the aromatic ring,
R'₁, R'₂, R'₃ and R'₄, which may be identical or different, each represent a hydrogen atom or a substituent not including any mesomeric-effect electron-withdrawing group conjugated to the aromatic ring, at least one substituent among R'₁, R'₂, R'₃ and R'₄ representing a hydrogen atom,
or one of the salts thereof,
so as to realize the substitution of a hydroxyl group of the lignin, in particular of a group borne by a benzylic carbon, by said compound having the general formula (II).

11. Method according to claim 10, according to which the compound having the general formula (II) is introduced into the reaction medium in a quantity such that the number of molar equivalents of the compound having the general formula (II) with respect to the number of benzylic carbons of the lignin is between 2 and 15.

12. Method according to any one of claims 10 to 11, according to which the reaction between the lignin and the compound having the general formula (II) is carried out in an acidic medium.

13. Method according to any one of claims 10 to 12, according to which the reaction between the lignin and the compound having the general formula (II) is carried out in an organic solvent, alone or in a mixture with water.

14. Method according to any one of claims 10 to 13, implemented on lignocellulosic biomass.

15. Method according to any one of claims 10 to 13, implemented on lignin extracted from lignocellulosic biomass.

16. Method according to any one of claims 10 to 13, implemented simultaneously to a method for extraction of lignin from lignocellulosic biomass.

17. Method for depolymerisation of lignin, **characterised in that** is comprises the two successive steps of:
- implementing a method for preparing a lignin derivative according to any one of claims 10 to 16,
- and cracking of the lignin derivative thus obtained.

18. Method according to claim 17, according to which said two steps are carried out successively in the same reactor.

19. Depolymerisation product obtainable by a method for depolymerisation of lignin according to any one of claims 17 to 18.
